(19) Europäisches Patentamt
European Patent Office
Office européen des brevets

(11) **EP 2 686 811 B1**

(12) **EUROPÄISCHE PATENTSCHRIFT**

(45) Veröffentlichungstag und Bekanntmachung des Hinweises auf die Patenterteilung:
**04.03.2015   Patentblatt 2015/10**

(21) Anmeldenummer: **12709878.8**

(22) Anmeldetag: **16.03.2012**

(51) Int Cl.:
***G06K 19/077*** *(2006.01)*

(86) Internationale Anmeldenummer:
**PCT/EP2012/054738**

(87) Internationale Veröffentlichungsnummer:
**WO 2012/126862 (27.09.2012 Gazette 2012/39)**

(54) **BAUWERKSZUGANGSVORRICHTUNG SOWIE BAUELEMENT HIERFÜR**

ACCESS-STRUCTURE FOR A CONTRUCTION SITE AND CORRESPONDING CONSTRUCTION ELEMENT

STRUCTURE D'ACCES POUR UNE ZONE DE CONSTRUCTION ET ELEMENT DE CONSTRUCTION CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2011   DE 102011014422**
**29.04.2011   DE 102011100020**
**29.04.2011   DE 102011100046**
**04.08.2011   DE 102011114736**

(43) Veröffentlichungstag der Anmeldung:
**22.01.2014   Patentblatt 2014/04**

(73) Patentinhaber: **Hörmann KG Antriebstechnik 33803 Steinhagen (DE)**

(72) Erfinder:
• **BOLLENBACHER, Helmut**
**56154 Boppard-Buchholz (DE)**
• **BIERHENKE,Rüdiger**
**33657 Lemgo (DE)**

(74) Vertreter: **Flügel Preissner Kastel Schober Patentanwälte PartG mbB Nymphenburger Strasse 20a 80335 München (DE)**

(56) Entgegenhaltungen:
**EP-A1- 1 376 463     DE-A1-102009 006 977 GB-A- 2 453 829**

## Beschreibung

Die Erfindung betrifft eine Bauwerkszugangsvorrichtung sowie ein Bauelement hierfür.

Als Bauwerkszugangsvorrichtung im Sinne der Erfindung kommt insbesondere eine Tür, ein Tor oder ein Ladedock in Frage. Insbesondere dient die Bauwerkszugangsvorrichtung zum Schaffen eines Durchgangswegs zum Einbringen oder Ausbringen von Waren oder Gütern in ein Bauwerk oder aus einem Bauwerk hinaus. Außerdem betrifft die Erfindung ein Bauelement als Teil einer solchen Bauwerkszugangsvorrichtung.

In besonders bevorzugter Ausgestaltung betrifft die Erfindung z.B. ein Ladedock zum Andocken von Transportfahrzeugen an ein Gebäude. In besonders bevorzugter Ausgestaltung des Bauelements ist als Bauelement eine Ladebrücke oder eine Laderampe für ein solches Ladedock vorgesehen.

Die Erfindung ist jedoch nicht auf Ladedocks oder Ladebrücken beschränkt; sie betrifft auch andere Bauwerkszugangsvorrichtungen, wie Türen oder Tore, die als Zugang für ein Bauwerk dienen können, um hier insbesondere Waren oder Güter in das Bauwerk hinein oder aus dem Bauwerk hinaus zu transportieren.

Eine Bauwerkszugangsvorrichtung, die als Zugang für ein Bauwerk dient, um Waren oder Güter in das Bauwerk hineinzutransportieren, ist aus der GB2 453 829 A bekannt. Diese Druckschrift betrifft eine Vorrichtung zum Kontrollieren der Einfahrt eines Lieferfahrzeuges zu einer Anlieferungsstelle. Um einen Fahrer des Lieferfahrzeuges davon zu entlasten, zur Einfahrt aus dem Fahrzeug aussteigen zu müssen und Informationen ans Sicherheitspersonal zu liefern, um dann vom Sicherheitspersonal Einlass zu erhalten und ein bestimmtes Ladedock zugeordnet zu bekommen, ist vorgesehen, dass ein erster RFID-Leser an einer entfernten Ladestation vorgesehen ist, welcher mit RFID-Transpondern an dem Lieferfahrzeug kommuniziert. Informationen über das Lieferfahrzeug werden an einen Speicher in der Anlieferungsstelle geliefert. Im Bereich einer Zufahrt ist an einer besonderen Kommunikationszelle ein zweiter RFID-Leser zum Erfassen der RFID-Transponder des Lieferfahrzeuges vorgesehen. Neben dem Leser ist auch ein berührungssensitiver Monitor zur Bedienung durch den Fahrer vorgesehen, falls das Lesen nicht funktioniert. Nach einer Verifikation der in dem RFID-Transponder gespeicherten Daten wird ein den Bauwerkszugang versperrendes Bauelement in Form einer Schranke freigegeben, so dass der Fahrer in die Anlieferungsstelle hineinfahren kann und dort ein bestimmtes Ladedock anfahren kann.

Aus der EP 1 376 463 A1 ist ein Verfahren zum Anbringen eines RFID-Transponders mit einem Chip und einer Spule an einem Metallkörper bekannt. Dabei wird der Metallkörper mit einer Bohrung versehen, so dass der Transponder innerhalb einer Kalvität in dem Metallkörper aufgenommen ist. Ein Magnetfeld erreicht durch ein Fenster in Form eines schmalen Spaltes den Transponder. Der Transponder kann in einer Hülle untergebracht sein und dort von einer elastischen Masse umgeben sein. Der Raum zwischen der Hülle und der Kalvität kann durch eine Vergussmasse ausgegossen sein. Hierdurch wird ein RFID-Transponder in einem Metallkörper vor Beschädigung geschützt untergebracht.

Aus der DE 10 2009 006 977 A1 ist es bekannt, RFID-Transponder zur Übertragung von Postitionsdaten im Bereich einer Fahrbahn in der Straße anzubringen. Die Transponder liefern Positionsinformationen. Hierdurch lässt sich beispielsweise durch eine Kommunikation mit Sende-Empfangs-Einheiten in die Straße benutzenden Fahrzeugen ein Spurhalteassistent oder ein automatisches Einparksystem realisieren. Außerdem lässt sich durch eine Kommunikation mit in der Fahrbahn eingebetteten Transpondern, die GPS-Positionsdaten enthalten, eine Korrektur der Positionsbestimmung durch bordeigene Navigationsgeräte erreichen.

Viele Handelsunternehmen akzeptieren nur noch Warenanlieferungen, die mit RFID-Transpondern, wie z.B. RFID-Chips, gekennzeichnet sind. Dadurch kann man die gesamte Logistikkette vollständig automatisieren. Geht die Warenkennzeichnung über Barcodes, muss die Ware jedoch abgesetzt werden und der Barcode muss eingelesen werden. Bei RFID-Transpondern kann das Einlesen automatisch erfolgen.

Es ist beispielsweise bereits bekannt, RFID-Transponder zur Überwachung der Kühlkette einzusetzen.

Nun werden die meisten Warenlieferungen heutzutage immer noch über Paletten geliefert. Die RFID-Transponder befinden sich z.B. an der Palette.

Es ist wünschenswert, Ladestellen wie Ladedocks mit RFID-Antennen zu versehen, so dass das Passieren eines RFID-Transpondern durch eine Ladestelle automatisch erfassbar ist. Dadurch kann man erfassen, an welcher Ladestelle zu welcher Zeit welcher RFID-Transponder eingegangen oder ausgegangen ist. Hierüber kann man beispielsweise die LKW und die Lieferung identifizieren. Auch kann man diese Information zum automatischen Verbuchen des Wareneingangs verwenden.

Eine umfassende Darstellung von RFID-Anwendungen in der Logistik sowie der hierzu eingesetzten Techniken findet sich in Lenzbauer, S. - RFID-Anwendungen in der Logistik, Diplomarbeit an der Wirschaftuniversität Wien, Schriftenreihe des Instituts für Transportwirtschaft und Logistik, Nr. 2, (2007 LOG), veröffentlicht 2007 online via ePub, http:/epub.wu-wien.ac.at, hier als Teil der Offenbarung beigefügt.

Bei Ladestellen oder bei anderen Bauwerkszugängen, wo ein Wareneingang oder -ausgang stattfindet, sind die Bauwerkszugangsvorrichtungen wie Türen, Tore oder Ladedocks oft rauen Betriebsbedingungen unterworfen. Beispielsweise fahren Transportfahrzeuge wie Lastkraftwagen bis in den Kontakt mit dem Bauwerk und mit der Bauwerkszugangsvorrichtung hinein. Beim Transport von Waren oder Gütern durch die Tore oder Türöffnung oder die Verladestelle stoßen oft Transportfahrzeuge oder die Waren an Begrenzungen, wie beispielsweise Zargen, Türblätter oder Torblätter, an. Die Durchgangswege müssen für hohe Belastungen ausgebildet sein; beispielsweise sollen auch voll beladene Flurförderfahrzeuge über die Durchgangswege fahren können. Waren werden zudem oft auf Paletten transportiert, die zum Teil tonnenschwer sind.

Es ist daher wünschenswert, dass solche Bauwerkszugangsvorrichtungen sehr robust ausgebildet sind. Daher sind die Türen oder Tore oder die Fahrwege von Ladedocks, insbesondere Ladebrücken oder Laderampen, oft aus Metall, wie beispielsweise Stahlblech oder Stahlplatten, ausgebildet.

Andererseits soll an einem solchen Wareneingang oder -ausgang eine möglichst genaue Erfassung von mit RFID-Markern oder RFID-Etiketten gekennzeichneten Waren oder Gütern erfolgen. Daher werden im Bereich solcher Bauwerkszugangsvorrichtungen aufwändig RFID-Sende- oder Empfangseinrichtungen installiert, die gegenüber den rauen Betriebsbedingungen geschützt werden müssen und insbesondere gegenüber Stößen geschützt werden müssen. Hinsichtlich der Erfassung von RFID-Etiketten sind die bisherigen RFID-Sende- oder Empfangseinrichtungsanordnungen nicht optimal. Es gibt insbesondere Probleme beim Erfassen von metallischen Waren, von Transportbehältern mit flüssigen Materialien, die abschirmend für RFID-Signale wirken, sowie von In Gitterboxen transportierten Waren. Die Erfassung solcher Waren macht auch dann Probleme, wenn ein RFID-Transponder an einer Palette zum Transport solcher Waren angebracht ist.

Es ist daher Aufgabe der Erfindung, eine RFID-Erfassung im Bereich von Wareneingängen und Warenausgängen in besserer Empfangsqualität zu schaffen, wobei zusätzliche Schutzmaßnahmen zum Schutz von RFID-Sende- oder Empfangseinrichtungen gegen die rauen Betriebsbedingungen im Bereich solcher Wareneingänge und -ausgänge möglichst vermeidbar sind.

Diese Aufgabe wird durch eine Bauwerkszugangsvorrichtung nach Anspruch 1 gelöst.

Ein Bauelement zum Bilden eines Teils einer solchen Bauwerkszugangsvorrichtung ist Gegenstand des Anspruchs 9.

Vorteilhafte Ausgestaltungen der Erfindung sind Gegenstand der Unteransprüche.

Die Erfindung schafft eine Bauwerkszugangsvorrichtung zum Schaffen eines Durchgangswegs zum Ein- oder Ausbringen von Waren oder Gütern in ein oder aus einem Bauwerk, wobei die Bauwerkszugangsvorrichtung als Tür, als Tor oder als Ladedock ausgebildet ist und einen dem Durchgangsweg zuzuwendenden Metallbereich aufweist, wobei der Metallbereich auf der dem Durchgangsweg abzuwendenden Seite mit einer RFID-Sende- oder Empfangseinrichtung und mit einem Signaldurchlassbereich zum Durchlassen von RFID-Signalen zu oder von der RFID-Sende- oder Empfangseinrichtung von bzw. zu dem Durchgangsweg versehen ist.

Weiter schafft die Erfindung ein zumindest teilweise aus Metall gebildetes Bauelement zum Bilden eines Teils einer solchen Bauwerkszugangsvorrichtung, wobei das Bauelement eine Ladebrücke, ein Türelement, ein Torelement, eine Zarge, ein Türblatt, ein Torblatt oder ein Tür- oder Torschwellenelement zum Bilden einer Tür- oder Torschwelle ist, wobei wenigstens ein Metallbereich des Bauelements zum Begrenzen oder Definieren eines Durchgangswegs für Waren, Fahrzeuge oder Güter vorgesehen ist, der eine RFID-Sende- und/oder Empfangseinheit auf einer dem Durchgangsweg abgewandten Seite und einen Signaldurchlassbereich zum Durchlassen von RFID-Signalen durch den Metallbereich hindurch von dem Durchgangsweg zu der RFID-Sende- und/oder Empfangseinheit und/oder umgekehrt aufweist.

Eine vorteilhafte Ausführung der Erfindung betrifft die Anbringung einer RFID-Kommunikationskomponente im unteren Bereich einer Ladestelle oder Ladebrücke.

Dadurch lassen sich gerade Paletten einfacher erfassen, da die Paletten die Waren tragen und somit nahe des Bodens die Ladebrücke passieren.

Wenn man eine RFID-Sende- und/oder-Empfangs-Einrichtung am Bodenbereich einer Ladebrücke anbringt, kann man somit RFID-gekennzeichnete Paletten auch dann sicher erkennen, wenn diese Paletten Metallprodukte tragen.

Ein anderer Aspekt der Erfindung betrifft die Anbringung der RFID-Antennen an den Metallbereichen einer Ladebrücke.

Vorzugsweise wird die RFID-Antenne auf der der Ware abgewandten Seite angebracht, also am rückwärtigen Bereich. Dadurch sind die RFID-Antennen sehr gut gegen äußere Einflüsse und die harten Einsatzbedingungen an solchen Ladebrücken geschützt.

Beispielsweise befindet sich die RFID-Antenne unterhalb der Metallplatte eines Brückenelements der Ladebrücke, über welche die Waren zum Einladen und Ausladen verfahren werden.

Vorzugsweise befindet sich eine Antenne zur Kommunikation in einem automatischen Warenüberwachungssystem an einem Plateau einer Ladebrücke oder einer Laderampe eines Ladedocks.

Das die RFID-Antenne tragende Element weist vorzugsweise durchgängige metallfreie Bereiche, beispielsweise Ausnehmungen, Fenster oder dergleichen auf, die als Löcher ausgebildet sein können oder mit nicht-leitenden Materialien verschlossen sein können.

Vorzugsweise sind Durchgangsbereiche zum Durchlassen der Signale von und zur RFID-Antenne ausgebildet.

In einem Ausführungsbeispiel befindet sich in einer Ladebrücke eine gitterähnliche Ausnehmung oder eine Schlitzausnehmung, die durch die Signale zwischen RFID-Transponder und RFID-Antenne passiert werden können.

Die Erfindung betrifft insbesondere die Anbringung von RFID-Antennen an Ladebrücken.

In bevorzugter Ausgestaltung ist eine Vorschubladebrücke oder eine Klappkeilladebrücke mit einer oder mehreren Antennen versehen, die auf der Unterseite der Vorschubladebrücke oder einer Klappkeilladebrücke angebracht sind.

Als Durchlassbereiche sind vorzugsweise beliebige Einzelschlitze und Schlitzgruppen im Plateioublech vorgesehen.

Antennen befinden sich vorzugsweise unterhalb des Plateublechs im Bereich der Einzelschlitze oder Schlitzgruppen.

Die Schlitzgruppen befinden sich punktuell und in Querrichtung oder punktuell und in Längsrichtung.

Zwischen einzelnen Verladestellen können Abschirmeinrichtungen vorgesehen werden, um eine fehlerhafte Erfassung von RFID-gekennzeichneter Waren zu vermeiden, die über benachbarte Ladebrücken verladen werden.

Diese Abschirmeinrichtungen können als Pendeltore mit Abschirmeinrichtungen, beispielsweise Kunststoff-Pendeltore mit Drahteinlagen oder Kunststoff-Streifenvorhänge mit Überlappung und mit Drahteinlagen vorgesehen werden.

Bisherige Lösungen sehen separate RFID-Antennen im Umfeld des Tores der Verladestelle vor.

Diese Lösungen hatten das Problem, dass kein RFID-Signal empfangen werden konnte, wenn der RFID-Transponder zu der Unterseite der Palette angeordnet war.

Eine vorteilhafte Ausgestaltung der Erfindung sieht vor, dass durch entsprechende Schlitze und Anordnung von geeigneten Antennen die RFID-Signale auch in diesem Falle empfangen werden können.

Vorteile sind insbesondere, dass wenige Antennen notwendig sind und eine einfache Montage möglich ist.

Die Erfindung ist jedoch nicht nur auf Bauwerkszugangsvorrichtungen in Form von Verladestellen oder Ladedocks beschränkt. RFID-Sende und Empfangseinheiten lassen sich insbesondere auch in Türen oder Tore einbringen, beispielsweise in Türblätter oder Torblätter oder insbesondere in Zargenrahmen oder Türschwellen oder Torschwellen. Auf diese Bereiche sind häufig insbesondere für Gebrauch an Wareneingängen oder Warenausgängen aus Metallen, wie vorzugsweise aus Stahlblechen, gebildet. Entsprechende Metallbereiche solcher Türen oder Tore oder deren Bauelemente lassen sich ebenfalls mit Signaldurchlassbereichen für RFID-Signale versehen, so dass RFID-Sende- und/oder Empfangseinheiten hinter dem Metallbereich, abgewandt von dem Durchgangsweg für die Waren oder Güter, und somit recht geschützt angebracht werden können.

Auch hier ist eine Anbringung in einem unteren Bereich zur Erfassung von RFID-Etiketten oder Markierungen von unten bevorzugt.

Die Signaldurchlassbereiche sind vorzugsweise derart gestaltet, dass der Metallbereich nur insoweit durchbrochen wird, dass ein Signaldurchlass ermöglicht ist, ansonsten aber der Metallbereich weiterhin vor der RFID-Sende- und/oder Empfangseinheit liegt, um diese gegen Stöße zu schützen oder ein Überfahren durch Flurförderfahrzeuge oder andere Warentransporteinrichtungen zu ermöglichen.

Besonders bevorzugt weist der Signaldurchlassbereich eine Durchgangsöffnung in dem Metallbereich auf, deren größte Innenweite kleiner als die Hälfte der Wellenlänge der RFID-Signale ist, für die die RFID-Sende- und/oder Empfangseinheit ausgelegt ist.

Der wenigstens eine Signaldurchlassbereiche ist vorzugsweise mit Schlitzen versehen, die relativ schmal und länglich ausgebildet sind. Es hat sich gezeigt, dass Schlitze oder Schlitzanordnungen mit entsprechend an die Wellenlänge der verwendeten RFID-Signale angepassten Dimensionen RFID-Signale gut durchlassen, aber dennoch den Metallbereich nur sehr gering schwächen, so dass z.B. eine Ladebrücke weiterhin zum Überfahren durch auch schwer beladener Flurförderfahrzeuge geeignet ist. Vorzugsweise ist die Schlitzlänge kürzer als die Hälfte der verwendeten Wellenlänge. Dadurch verhält sich der Schlitz nach dem Huygensschen Prinzip wie ein Sekundärstrahler, der sich durch einen Primärstrahler, wie z.B. eine Antenne hinter dem Schlitz, zu Abstrahlung von RFID-Signalen anregen lässt.

Zum Schutz gegen Verschmutzungen können die Öffnungen oder Durchlässe, wie insbesondere Schlitze, mit einem signaldurchlassenden Material, insbesondere einem nicht leitenden Material, mehr insbesondere einem Kunststoff, ausgefüllt sein. Beispielsweise können Schlitze oder dergleichen durch Brechungen mit Kunststoff derart verfüllt sein, dass das Vorhandensein des Signaldurchlassbereiches gar nicht auffällt.

Der Durchlassbereich kann ein Verstärkungselement zur mechanischen Verstärkung des Metallbereiches aufweisen. Vorzugsweise ist ein Verstärkungselement auf der dem Zugang abgewandten Seite aufgebracht. Vorzugsweise ist das Verstärkungselement aus Metall wie z.B. als Metallplatte, aufgeführt und weist entsprechende Öffnungen und/oder Schlitze wie der Metallbereich auf.

Das Verstärkungselement kann auf den Metallbereich aufgeschweißt, aufgeklebt oder sonst wie darauf fest verbunden sein.

Vorzugsweise sind über die Breite einer Ladebrücke mehrere Signaldurchlassbereiche mit entsprechenden Sende- und/oder Empfangseinheiten vorgesehen, so dass sichergestellt wird, dass bei einem Überfahren der Ladebrücke mit einer RFID-gekennzeichneten Palette oder einer sonstigen mit RFID-gekennzeichneten Ware eine sichere RFID-Erfassung, insbesondere von unten, möglich ist.

Die Erfindung betrifft gemäß einem weiteren Aspekt ein Ladedock zum Andocken von Transportfahrzeugen an ein Gebäude. Außerdem betrifft die Erfindung eine Ladebrücke oder eine Laderampe für ein solches Ladedock. Gemäß diesem Aspekt ist eine Ladestelle wie Ladedock und/oder eine Ladebrücke vorzusehen, mit der eine verbesserte Warenüberwachung ermöglicht ist.

Gemäß einer Ausgestaltung der Erfindung wird eine Ladebrücke mit einer RFID-Antenne versehen, so dass das Passieren eines RFID-Chips durch die Ladebrücke automatisch erfassbar ist. Dadurch kann man erfassen, an welcher Ladebrücke zu welcher Zeit welcher RFID-Chip eingegangen oder ausgegangen ist. Hierüber kann man beispielsweise die LKW und die Lieferung identifizieren. Auch kann man diese Information zum automatischen Verbuchen des Wareneingangs verwenden.

Probleme dabei gibt es dann, wenn die RFID-Chips in der Nähe von Metall angebracht sind. Auch gibt es Probleme dahingehend, wenn RFID-Antennen im Bereich von Metallen angebracht sind, so dass der Empfang gestört ist.

Gerade bei Ladebrücken ist eine Verwendung von Metall üblich, so dass die Anbringung von Antennen im Bereich der Ladebrücken schwierig und aufwändig ist.

Jedoch lässt sich dieses Problem durch Verwendung von angepassten Antennenanordnungen, insbesondere Schlitzantennen, vermeiden.

Die Anbringung von RFID-Vorrichtungen in Verbindung mit Ladebrücken hat ganz wesentliche Vorteile gegenüber den bisher bekannten im Bereich von Ladedocks RFID-Anordnungen.

Zunächst ist eine Erfassung von unten ermöglich, wobei einerseits komplizierte Antennenbrücken und deren Montagen vermeidbar sind.

Außerdem ist der Aufbau der RIFD-Einrichtung gegenüber bekannten Lösungen wesentlich vereinfacht. Es müssen keine gesonderten RFID-Antennen mehr im Boden oder auf dem Boden angebracht werden. Gegenüber der Anbringung auf dem Boden hat die erfindungsgemäße Ausbildung den Vorteil, dass die RFID-Antennenanordnung innerhalb der Ladebrücke integriert werden kann und somit durch das Metall der Ladebrücke sehr gut geschützt ist. Gegenüber der Anordnung innerhalb oder unter eine Bodenoberfläche hat die erfindungsgemäße Ausbildung den Vorteil, dass keine zusätzlichen Bauarbeiten benötigt werden. Die RFID-Antennenanordnung kann bereits bei der Herstellung der Ladebrücke berücksichtigt werden und angeordnet werden.

Ladebrücken werden in der Regel motorisch angetrieben bewegt und benötigen dann eine Steuerung, die meist auch mit einer Steuerung für einen Antrieb eines entsprechenden Ladedock-Tors zusammengefasst ist. Dementsprechend gibt es im Bereich von Ladebrücken bereits elektrische Anschlüsse und auch passende Steuerungsgehäuse und auch Steuerungen zur Aufnahmen von elektronischen Schaltkreisen. Insofern lässt sich in eine Ladebrücke sehr einfach entsprechende RFID-Elektrik und Elektronik integrieren, so dass Informationsaustausch einfach durch Anschluss der entsprechenden Steuerung erfolgen kann. Eine Steuerung von Ladebrücke und Tor wird ohnehin meist an eine Gebäudeleittechnik angeschlossen, um so beispielsweise an einer zentralen Stelle erfassen zu können, ob noch ein Ladedock belegt ist oder offen ist oder dergleichen. Die entsprechende Informationstechnik kann ganz einfach auch zur Übertragung von RFID-Informationen eingesetzt werden.

Eine vorteilhafte Ausführung der Erfindung betrifft die Anbringung einer RFID-Kommunikationskomponente im unteren Bereich einer Ladestelle oder Ladebrücke.

Dadurch lassen sich gerade Paletten einfacher erfassen, da die Paletten die Waren tragen und somit nahe des Bodens die Ladebrücke passieren.

Wenn man eine RFID-Sende- und/oder -Empfangs-Einrichtung am Bodenbereich einer Ladebrücke anbringt, kann man somit RFID-gekennzeichnete Paletten auch dann sicher erkennen, wenn diese Paletten Metallprodukte tragen.

Ein anderer Aspekt der Erfindung betrifft die Anbringung der RFID-Antennen an den Metallbereichen einer Ladebrücke.

Vorzugsweise wird die RFID-Antenne auf der der Ware abgewandten Seite angebracht, also am rückwärtigen Bereich. Dadurch sind die RFID-Antennen sehr gut gegen äußere Einflüsse und die harten Einsatzbedingungen an solchen Ladebrücken geschützt.

Beispielsweise befindet sich die RFID-Antenne unterhalb der Metallplatte eines Brückenelements der Ladebrücke, über welche die Waren zum Einladen und Ausladen verfahren werden.

Vorzugsweise befindet sich eine Antenne zur Kommunikation in einem automatischen Warenüberwachungssystem an einem Plateau einer Ladebrücke oder einer Laderampe eines Ladedocks.

Das die RFID-Antenne tragende Element weist vorzugsweise durchgängige metallfreie Bereiche, beispielsweise Ausnehmungen, Fenster oder dergleichen auf, die als Löcher ausgebildet sein können oder mit nicht-leitenden Materialien verschlossen sein können.

Vorzugsweise sind Durchgangsbereiche zum Durchlassen der Signale von und zur RFID-Antenne ausgebildet.

In einem Ausführungsbeispiel befindet sich in einer Ladebrücke eine gitterähnliche Ausnehmung oder eine Schlitzausnehmung, die durch die Signale zwischen RFID-Chip und RFID-Antenne passiert werden können.

Die Erfindung betrifft insbesondere die Anbringung von RFID-Antennen an Ladebrücken.

In bevorzugter Ausgestaltung ist eine Vorschubladebrücke oder eine Klappkeilladebrücke mit einer oder mehreren Antennen versehen, die auf der Unterseite der Vorschubladebrücke oder einer Klappkeilladebrücke angebracht sind.

Als Durchlassbereiche sind vorzugsweise beliebige Einzelschlitze und Schlitzgruppen im Plateaublech vorgesehen.

Die Einzelschlitze oder Schlitzgruppen können selbst als Schlitzantennen ausgebildet sein. Gemäß einer weiteren Ausgestaltung der Erfindung wird der wenigstens eine Schlitz in dem Plateaublech durch eine weitere Antenne parasitär gespeist. Solche weiteren Antennen befinden sich vorzugsweise unterhalb des Plateaublechs im Bereich der Einzelschlitze oder Schlitzgruppen.

Die Schlitzgruppen befinden sich punktuell und in Querrichtung oder punktuell und in Längsrichtung.

Zwischen einzelnen Verladestellen können Abschirmeinrichtungen vorgesehen werden, um eine fehlerhafte Erfassung von RFID-gekennzeichneter Waren zu vermeiden, die über benachbarte Ladebrücken verladen werden.

Diese Abschirmeinrichtungen können als Pendeltore mit Abschirmeinrichtungen, beispielsweise Kunststoff-Pendeltore mit Drahteinlagen oder Kunststoff-Streifenvorhänge mit Überlappung und mit Drahteinlagen vorgesehen werden.

Bisherige Lösungen sehen separate RFID-Antennen im Umfeld des Tores der Verladestelle vor.

Diese Lösungen hatten das Problem, dass kein RFID-Signal empfangen werden konnte, wenn der RFID-Chip zu der Unterseite der Palette angeordnet war.

Eine vorteilhafte Ausgestaltung der Erfindung sieht vor, dass durch entsprechende Schlitze und Anordnung von geeigneten Antennen die RFID-Signale auch in diesem Falle empfangen werden können.

Vorteile sind insbesondere, dass wenige Antennen notwendig sind und eine einfache Montage möglich ist.

Ausführungsbeispiele der Erfindung werden nachfolgend anhand der beigefügten Zeichnungen näher erläutert. Darin zeigt:

Fig. 1    eine schematische Darstellung einer Verladestelle an einem Gebäude, beispielsweise zum Andocken von Lastkraftwagen oder anderen Transportfahrzeugen, mit einer Ladebrücke;

Fig. 2    ein weiteres Beispiel einer bei einer solchen Verladestelle einsetzbaren Ladebrücke;

Fig. 3    eine seitliche perspektivische Darstellung einer Verladestelle mit Tor- und Ladebrücke, die von einem Flurförderfahrzeug mit einer RFID-gekennzeichneten Palette überfahren wird;

Fig. 4    eine perspektivische Draufsicht auf die Ladebrücke von Fig. 3;

Fig. 5    eine Detailansicht der Ladebrücke von Fig. 4;

Fig. 6    eine Darstellung auf eine Schlitzkombination bei einer Ladebrücke mit drei Schlitzen von unten;

Fig. 7    eine perspektivische Darstellung einer Euro-Palette mit RFID-Kennung;

Fig. 8    eine Prinzipdarstellung einer beladenen Palette mit RFID;

Fig. 9    eine Prinzipdarstellung einer Erfassung einer beladenen Palette mit einer Bodenantenne;

Fig. 10 bis Fig. 14    unterschiedliche Ausführungsformen von Schlitzanordnungen in schematischer Darstellung;

Fig. 15    eine schematische Darstellung einer ersten Ausführungsform einer Antenne einer RFID-Sende- und/oder Empfangseinrichtung;

Fig. 16    eine schematische Darstellung einer zweiten Ausführungsform einer Antenne;

Fig. 17    eine schematische Darstellung eines Erfassungsbereiches einer hinter einem Metallbereich angeordneten RFID-Antenne;

Fig. 18    eine schematische Darstellung einer Ladebrücke von unten mit drei Antennen;

Fig. 19    eine schematische Darstellung einer Anordnung zum Auffinden einer geeigneten Position der Antenne;

Fig. 20      eine schematische Darstellung des Empfangsbereiches einer unterhalb einer Ladebrücke angeordneten Antenne bei der praktischen Erfassungen von Paletten;

Fig. 21      eine perspektivische Darstellung der Anordnung von Antenne und Schlitzkombination mit einer Verstärkungseinrichtung;

Fig. 22      eine weitere Ausführungsform einer Bauwerkszugangsvorrichtung in Form eines Tores;

Fig. 23      eine weitere Ausführungsform einer Bauwerkszugangsvorrichtung in Form eines weiteren Tores;

Fig. 24      eine schematische Darstellung einer weiteren Ausführungsform einer Bauwerkszugangsvorrichtung in Form einer Tür.

Fig. 25      eine schematische Darstellung einer Ladestelle mit Darstellung möglicher elektrischer und elektronischer Anschlüsse bezüglich RFID- und Ladebrückenansteuerung; und

Fig. 26      eine schematische Darstellung einer Ladebrücke mit Beispielen von unterschiedlichen RFID-Antennenanordnungen, die jeweils für sich alternativ in die Ladebrücke integriert sein können.

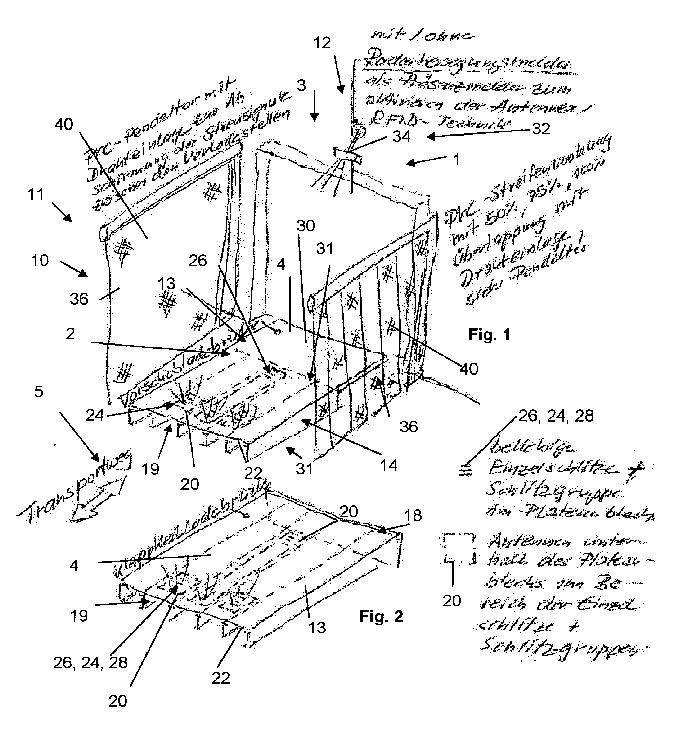

In Fig. 1 ist schematisch eine Bauwerkszugangsvorrichtung 1 zum Schaffen eines Durchgangsweges 2 gezeigt, auf dem Waren oder Güter in ein Bauwerk 3 eingebracht werden können oder ausgebracht werden können. Ein Fahrweg 5 des Durchgangsweges 2 ist durch einen Metallbereich 4 der Bauwerkszugangsvorrichtung 1 gebildet. Auf der dem Durchgangsweg 2 abgewandten Seite des Metallbereiches 4 sind mehrere RFID-Empfangs- und/oder Sendeeinheiten 19 angebracht.

In den Ausführungsformen gemäß den Fig. 1 und 2 ist die Bauwerkszugangsvorrichtung 1 als Ladedock oder Dock 11, insbesondere mit Ladebrücke 13, ausgebildet.

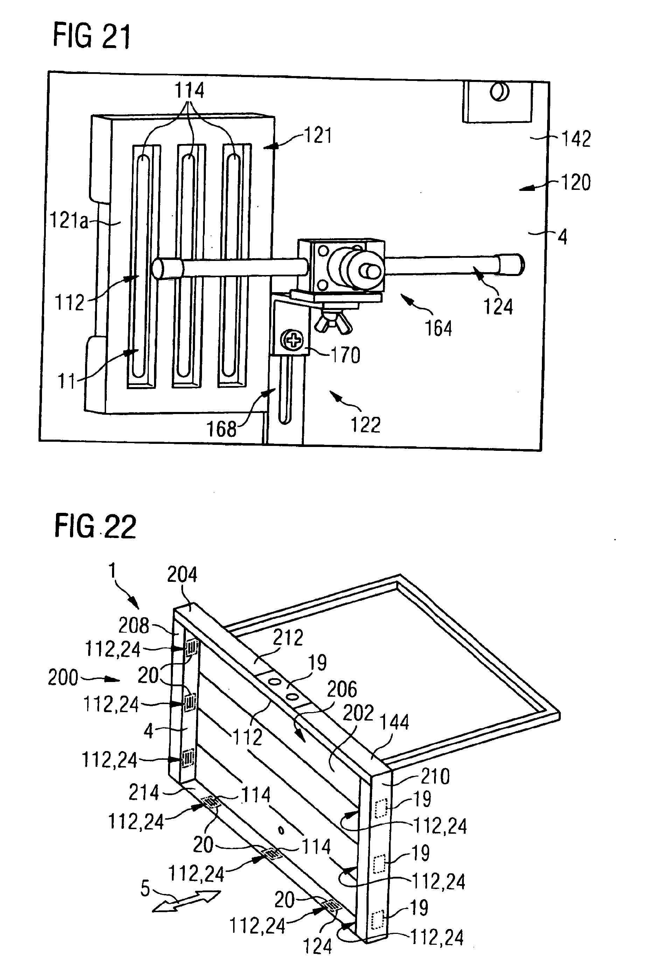

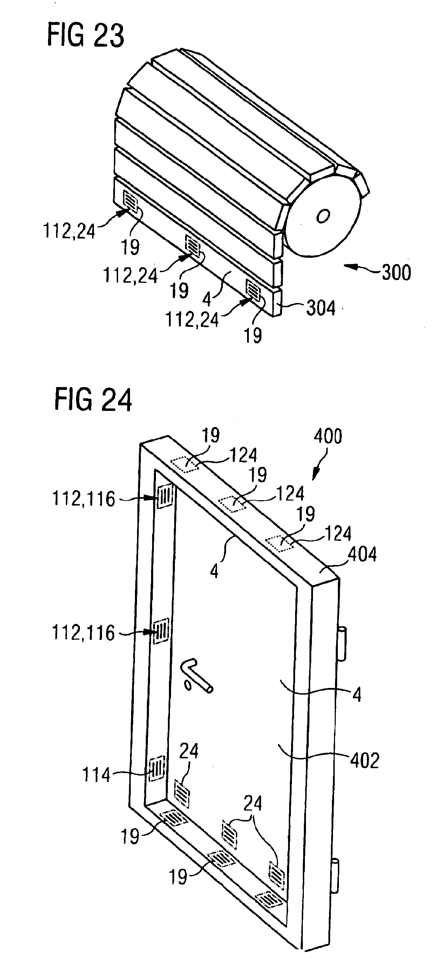

Bei den Ausführungsformen gemäß den Fig. 22 und 23 ist die Bauwerkszugangsvorrichtung als Tor 200, 300 ausgebildet.

In Fig. 24 ist ein weiteres Ausführungsbeispiel der Bauwerkszugangsvorrichtung 1 in Form einer Tür 400 dargestellt.

Gemeinsam ist eine Anordnung der RFID-Empfangs- und/oder Sendeeinheit 19 hinter einem Metallbereich 4, so dass der Metallbereich 4 zwischen dem Durchgangsweg 2 und der RFID-Sende- und/oder Empfangseinheit 19 angeordnet ist und diese entsprechend schützt.

Dies wird im Folgenden näher anhand der Ausführungsform der Bauwerkszugangsvorrichtung 1 als Ladedock 11 erläutert; die entsprechenden Prinzipien und Anordnungsmöglichkeiten sind für den Fachmann ohne Weiteres auf Türen und Tore sowie deren Bauelemente übertragbar.

In Fig. 1 ist eine Ladestelle oder Verladestelle 10 zum Andocken eines Transportfahrzeuges, wie beispielsweise eines LKWs, an ein Gebäude 12 dargestellt.

Die Verladestelle 10 kann als Dock 11 ausgebildet sein. Das Dock 11 kann in üblicher Weise mit einer Ladebrücke 11, mit Torabdichtungen und mit einem Torsystem versehen sein.

Die Ladestelle 10 kann insbesondere wie eine der Ladestellen ausgebildet sein, wie sie in der Firmenbroschüre "Neuheiten 2011 Verladetechnik" der Hörmann KG Verkaufsgesellschaft mit dem Druckvermerk "Stand 12/2010/Druck 12/2010/HF 86211 DE/G.XX" gezeigt und beschrieben ist, die unter anderem im Februar 2011 über das Internet verteilt worden ist. Eine Kopie dieser Broschüre ist der Anmeldung beigefügt und bildet Teil der hiesigen Offenbarung. Es wird für weitere Einzelheiten zu den Verladestellen mit Laderampen und Ladebrücken ausdrücklich auf die beigefügte Broschüre verwiesen.

Wie aus dieser Broschüre ersichtlich, kann die Verladestelle 10 beispielsweise mit einer Vorschubladebrücke 14 oder einer Klappkeilladebrücke 18 oder einer Laderampe versehen sein.

Auch Kombinationen sind möglich.

Eine solche Ladestelle, wie Sie aus der Firmenbroschüre bekannt ist, wird gemäß der hier vorgeschlagenen Lösung mit RFID-Technik versehen, wie dies im Folgenden anhand der Skizzen in Fig. 1 und 2 näher erläutert ist.

Das in Fig. 1 dargestellte Ausführungsbeispiel der Verladestelle 10 ist zusätzlich mit RFID-Technik zum Erfassen von mit RFID-Chips oder RFID-Etiketten oder sonstige RFID-Transpondern gekennzeichneten Waren oder Transportbehältern oder Transporteinrichtungen versehen.

Hierzu ist an einem unteren Bereich der Verladestelle 10 wenigstens eine RFID-Empfangs- und/oder Sendeeinheit 19, insbesondere eine RFID-Antenne 20 vorgesehen. Vorzugsweise sind mehrere Antennen 20 vorgesehen.

In dem Beispiel von Fig. 1 sind drei RFID-Antennen 20 unterhalb eines Bleches 22 einer Vorschubladebrücke 14 vorgesehen.

Das Blech 22 ist im Bereich der jeweiligen RFID-Antenne 20 mit einem Signaldurchlassbereich 24 versehen, durch welchen RFID-Signale passieren können.

Beispielsweise weist der Signaldurchlassbereich 24 Einzelschlitze 26 oder Schlitzgruppen 28 auf. Weitere Ausführungen weisen Nichtmetallbereiche, beispielsweise aus Kunststoff oder Keramik oder dergleichen auf. Z.B. könnten die Schlitze 26, 28 auch mit einem Dielektrikum verfüllt oder mit einer signaldurchlässigen Kappe aus Kunststoff versehen sein.

Vorzugsweise sind Einzelschlitze und Schlitzgruppen 26, 28 in einem Bereich eines Plateaus 30 der Verladestelle 10 vorgesehen. Dieser Plateaubereich kann die Vorschubladebrücke 14 oder die in Fig. 2 angedeutete Klappkeilladebrücke 18 und/oder eine (nicht dargestellte) Rampe - beispielsweise feststehend - umfassen.

Ist der Plateaubereich 30 aus Metall ausgebildet, ist vorzugsweise ein Signaldurchlassbereich 24 zum Durchlassen von RFID-Signalen zu der auf der der Waren abgewandten Seite des Plateaus 30 vorgesehen.

Wie aus Fig. 1 ersichtlich, kann die Verladestelle 10 auch mit einer Detektionseinrichtung 32 zum Detektieren eines Transportfahrzeuges versehen sein.

Beispielsweise weist die Detektionseinrichtung 32 einen Präsenzmelder auf.

Der Präsenzmelder kann ein Radarbewegungsmelder 34 sein oder einen solchen umfassen.

Die Detektionseinrichtung 32 ist an eine nicht näher dargestellte Steuereinrichtung angeschlossen. Wird ein Transportfahrzeug gemeldet, lassen sich dann die RFID-Antennen oder sonstige RFID-Empfangs-Sendetechnik - insbesondere RFID-Reader - aktivieren.

Die eigentliche RFID-Technik mit Antennen, Chips, Transpondern, Computern, Software usw. kann so ausgeführt sein, wie sie in der unterschiedlichen Beispielen bei Lenzbauer, S. - RFID-Anwendungen in der Logistik, siehe die hier beigefügte Diplomarbeit, ausgeführt sind. Diese Ausführungen bilden Teil der hiesigen Offenbarung.

Bei den erfindungsgemäßen Ausbildungen des Docks 11 bzw. der Ladestelle 10 kann eine Abschirmeinrichtung 36 vorgesehen sein, um die Verladestelle 10 gegenüber benachbarten Verladestellen (nicht dargestellt) abzuschirmen, um so einen fehlerhaften Empfang von über benachbarte Verladestellen passierende RFID-Kennungen zu vermeiden.

In einem ersten Ausführungsbeispiel weist die Abschirmeinrichtung 36 ein Kunststofftor 38 mit Drahteinlagen zur Abschirmung auf.

In einem zweiten Ausführungsbeispiel weist die Abschirmeinrichtung 36 einen Kunststoffvorhang 40 auf, z.B. einen Streifenvorhang mit einzelnen Streifen, die sich um ein gewisses Maß überlappen und die mit einer Drahteinlage zur Abschirmung versehen sind.

Vorzugsweise ist die Abschirmeinrichtung 36 flexibel ausgebildet, um Beschädigungen durch das und an dem Transportfahrzeug zu vermeiden. Es könnten auch Metallnetze oder Metalltore oder sonstige Abschirmungen aus leitendem Material eingesetzt werden.

Mittels der gezeigten Anordnung von RFID-Antennen 20 lässt sich das RFID-Signal unterhalb eines metallischen Plateaus 30 der Verladestelle 10, beispielsweise unterhalb des Plateaus 30 einer Ladebrücke 18, 14 empfangen.

Hierdurch lassen sich insbesondere RFID-Signale empfangen, wo der RFID-Transponder an einer Unterseite von Warenpaletten angeordnet ist.

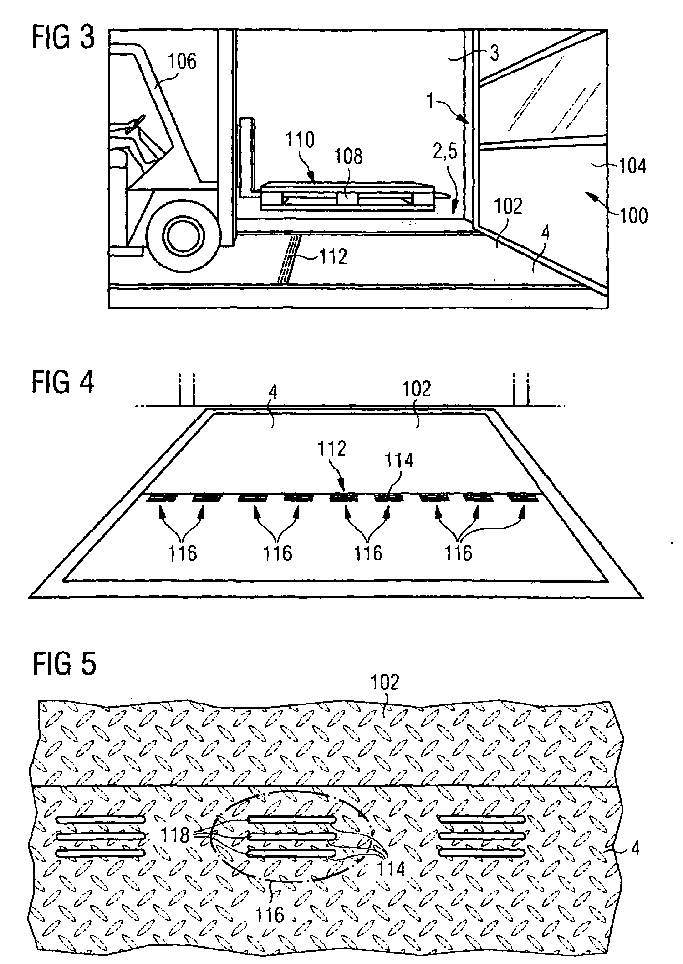

In Fig. 3 ist ein praktisches Ausführungsbeispiel für eine Ladestelle 100 als weiteres Ausführungsbeispiel der Bauwerkszugangsvorrichtung 1 mit einer Ladebrücke 102 und einem Tor 104 zum Abschließen der Ladestelle 100 dargestellt. Die Ladebrücke 102 ist aus Metall gebildet und bildet den Metallbereich 4, der die RFID-Sende- und/oder Empfangseinheit 19 schützt.

In Fig. 3 ist dargestellt, dass die Ladebrücke 102 zum Bilden des Fahrwegs 5 für ein Flurförderfahrzeug 106, hier in Form eines Gabelstaplers, ausgebildet ist, welches insbesondere zum Transport von Paletten 108 dient. Die Palette 108 ist ein Beispiel für einen Ladungsträger 110, der mit RFID gekennzeichnet ist und insbesondere einen Transponder trägt, wie dies später noch näher erläutert wird.

Ziel der RFID-Erfassung ist, mittels RFID Paletten oder Kisten und allgemein Ladungsträger 110 beim Überfahren der Ladebrücke 102 zu erfassen. Demgemäß ist ein Gabelstapler mit der Palette 108 auf der Ladebrücke 102 vor einem Ladetor 104 dargestellt.

Die Ladebrücke 102 ist mit Signaldurchlassbereichen 112 versehen.

Insbesondere ist die Ladebrücke 102, wie dies in Fig. 4 dargestellt ist, mit Schlitzen 114 versehen, durch die unter der Ladebrücke 102 montierte Antennen (in Fig. 4 nicht dargestellt) strahlen.

Wie dies näher in Fig. 5 dargestellt ist, die mehrere Schlitzanordnungen 116 mit jeweils mehreren Schlitzen 114 an der Ladebrücke 102 im Detail darstellt, sind die Schlitze 114 durch Kunststoffeinlagen verdeckt, um im Betrieb zu verhindern, dass Staub, Schmutz oder Wasser durch die Brücke dringt.

In Fig. 5 markiert ein Oval drei Schlitze 114, durch die genau eine Antenne strahlen kann. Insgesamt sind in Fig. 5 drei Schlitzkombinationen oder Schlitzanordnungen 116 zu sehen.

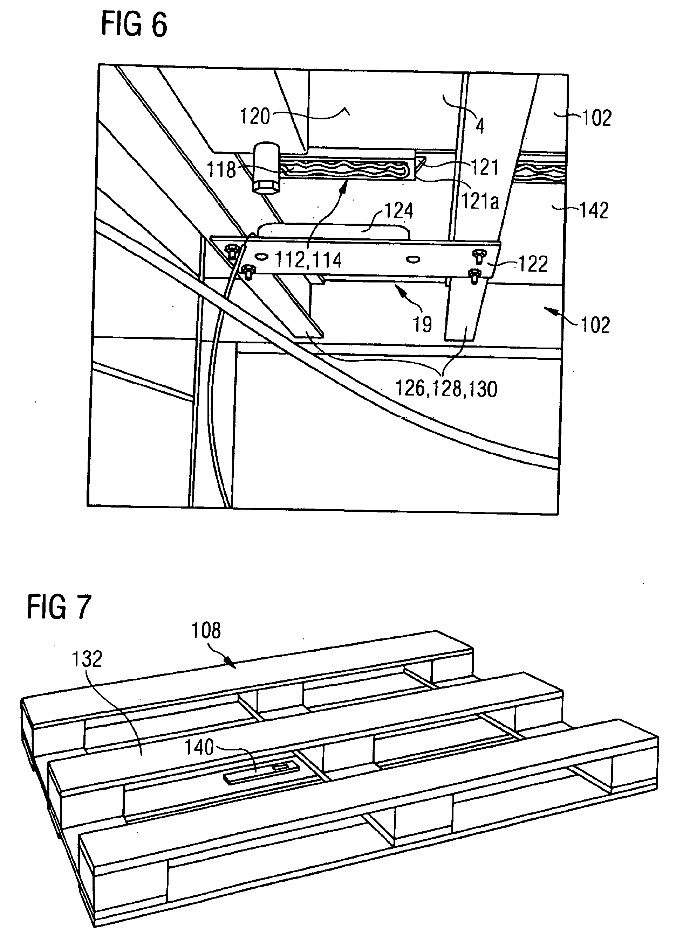

Fig. 6 zeigt die Schlitze 114 von der Unterseite 120 der Ladebrücke 102 aus gesehen.

Die Schlitze 114 sind durch wenigstens ein Verstärkungselement 121 verstärkt. Insbesondere ist ein mit entsprechenden Schlitzen versehenes metallisches Verstärkungselement 121 im Bereich jeder Schlitzanordnung 116 an der dem Fahrweg 5 abgewandten Seite des Metallbereiches 4 befestigt.

Bei dem in Fig. 6 dargestellten Ausführungsbeispiel sind die Schlitze 114 durch aufgeschweißte Unterlagen in Toren von Metallplattenverstärkungen 121 a verstärkt, um auch bei großer Punktbelastung auf die Ladebrücke 102 ein Einreißen zu verhindern.

Unterhalb der Schlitze 114 ist auf einer Befestigungsanordnung 122 mit Abstand zu den Schlitzen 114 eine Antenne 124 der RFID-Sende- und/oder Empfangseinheit 19 befestigt.

In dem in Fig. 6 dargestellten Ausführungsbeispiel weist die Ladebrücke 102 auf ihrer Unterseite 120 mehrere Verstärkungsrippen 126 in Form von T-Profilen 128 auf. An den Unterseiten dieser T-Profile ist ein Blech (beispielsweise Aluminiumblech) zum Tragen der Antenne 124 (beispielsweise eine Patch-Antenne) vorgesehen.

Die T-Profile 128 bilden Längsträger 130 der Ladebrücke 102. Ein Aluminiumblech ist links und rechts an Längsträgern 130 der Ladebrücke 102 angeschraubt, um die Befestigungsanordnung 122 zu bilden.

Fig. 6 zeigt somit eine Sicht auf eine Schlitzanordnung 116 mit drei Schlitzen 114 von unten. Auf der Befestigungsanordnung 122 sitzt eine UHF-RFID-Antenne 124, die nach oben auf die Schlitze 114 strahlt.

Fig. 7 zeigt die Palette 108 in Form einer Holzpalette im Euroformat. Auf einem Paletten-Längsträger 132 ist ein Transponder 140 aufgeschraubt, der eine Identifikation der Palette 108 mittels RFID ermöglicht.

Demnach zeigt Fig. 7 eine Holzpalette im Euroformat mit einem aufgeschraubten Transponder 140.

Mit der in den Fig. 3 und 4 dargestellten Ladebrücke lässt sich eine RFID-Erfassung von Ladungsträgern 110 von unten erreichen.

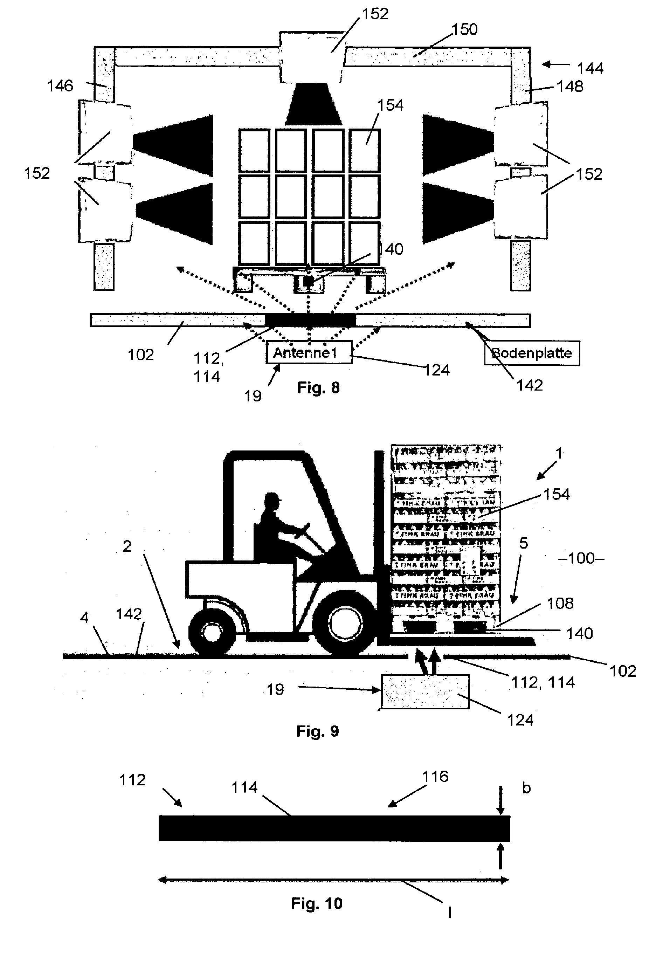

Eine schematische Darstellung einer solchen RFID-Erfassung von unten ist in Fig. 8 dargestellt.

Fig. 8 zeigt eine metallische Bodenplatte 142 mit Signaldurchlassbereich 19 und darunter angebrachter Antenne 124. Insbesondere ist hier die Ladungsbrücke 102 schematisch dargestellt.

In Fig. 8 ist weiter ein bisher übliches konventionelles UHF-Antennengate 144 dargestellt, das aus einem linken Träger 146, einem rechten Träger 148 und einem oben angebrachten Querträger 150 besteht. Am Querträger 150 ist eine Antenne 152 angeordnet, an beiden Seitenträgern 146, 148 sind jeweils zwei Antennen 152 angeordnet. Die schematisch dargestellten Dreiecke sollen die von den Antennen 152 des Antennengates 144 emittierten elektromagnetischen Wellen darstellen.

Das UHF-Antennengate 144 steht auf der Bodenplatte 142, die insbesondere zu der Ladebrücke 102 gehört.

Weiter ist die Palette 108 mit dem Transponder 140 und mit Waren 154 darauf dargestellt.

In dem dargestellten Beispiel soll die Palette 108 mit Waren 154 beladen sein, die aus Metall gebildet sind oder die Flüssigkeiten beinhalten; vorstellbar ist auch, dass die Waren 154 in einer sehr häufig eingesetzten metallischen Gitterbox (nicht dargestellt) gelagert sein könnten.

Eine solche Ware 154 kann von den UHF-Wellen nicht durchdrungen werden, so dass in der Regel eine Erfassung des Transponders 140 weder durch die Antenne 152 auf dem oberen Querträger 150 des Antennengates 144, noch durch die an den Seiten des Antennengates 144 angebrachten Antennen 152 möglich ist.

Freier Zugang ist lediglich von unten, d.h. durch die Schlitzkombinationen oder Schlitzanordnungen 116, in der Bodenplatte 142 möglich.

In Fig. 8 ist auch gut zu erkennen, dass die seitlichen Antennen des Antennengates 144 und die Träger 146, 148, 150 des Antennengates 144 selbst den Warenverkehr der Flurförderfahrzeuge 106 behindern können, während die Boden-Antenne 124, die durch die Schlitzkombinationen oder Schlitzanordnungen 116 strahlt, vollständig im Boden versenkt ist. Mithin ist auch keine Beschädigung der Boden-Antenne 124 möglich.

In Fig. 9 ist die praktische Erfassung einer Palette 108 mit einer Boden-Antenne 124 zu sehen. Es ist das Flurförderfahrzeug 106 mit der mit Waren 154, beispielsweise Getränkedosen, beladenen Palette 108 zu sehen, wobei der Transponder 140 der Palette 108 trotz der Beladung mit den metallischen Waren 154 leicht von unten durch die Bodenplatte 142 hindurch mittels der Bodenantenne 124 möglich ist.

Fig. 9 zeigt demnach die Erfassung einer beladenen Palette 108 mit RFID über eine Boden-Antennen-Schlitzkombination. Der Transponder 140 ist in der Palette 108 untergebracht.

Man sieht deutlich, dass der Fahrweg 5 für den Fahrer vollkommen frei von Antennenaufbauten ist.

Im Folgenden werden verschiedene mögliche Ausführungsformen von Schlitzanordnungen 116 oder Schlitzkombinationen anhand der Darstellungen in den Fig. 10 bis 14 näher erläutert.

Alle dargestellten Schlitzkombinationen weisen einen oder mehrere Einzelschlitze 114 auf.

In empirischen Versuchen ist ermittelt worden, dass bei den RFID-Wellenlängen, wie sie in Europa verwendet werden, Schlitze mit einer Breite von 6 mm und einer Länge von 140 mm ideal sind. Allgemein sind Schlitze z.B. mit einer Breite b von ca 1 mm bis 20 mm und einer Länge zwischen ca. 10 mm und ca. 500 mm vorgesehen.

Weist eine Schlitzanordnung 116 mehr als einen Schlitz 114 auf, so ist vorzugsweise ein vorbestimmter Abstand d vorgesehen. Insbesondere ist zwischen den Schlitzen 114 ein Steg 160 mit einer dem Abstand d entsprechenden Stegbreite vorgesehen.

In empirischen Versuchen hat sich eine Stegbreite von ca. 20 mm als ideal herausgestellt. Auch hier sind Abweichungen möglich, die je nach Material des Metallbereiches, insbesondere Metallmaterial und Materialdicke, und nach eingesetzter Wellenlänge auszuwählen sind.

Optimale Dimensionen der Schlitze 114 sowie der Schlitzabstände d lassen sich durch wenige empirische Versuche ermitteln.

Fig. 10 zeigt eine erste mögliche Schlitzanordnung 116 mit einem Schlitz 114. Es wird eine Schlitzkombination aus einem einzelnen Schlitz 114 gebildet. Die Schlitzbreite beträgt vorzugsweise 6 mm, die Schlitzlänge vorzugsweise 140 mm.

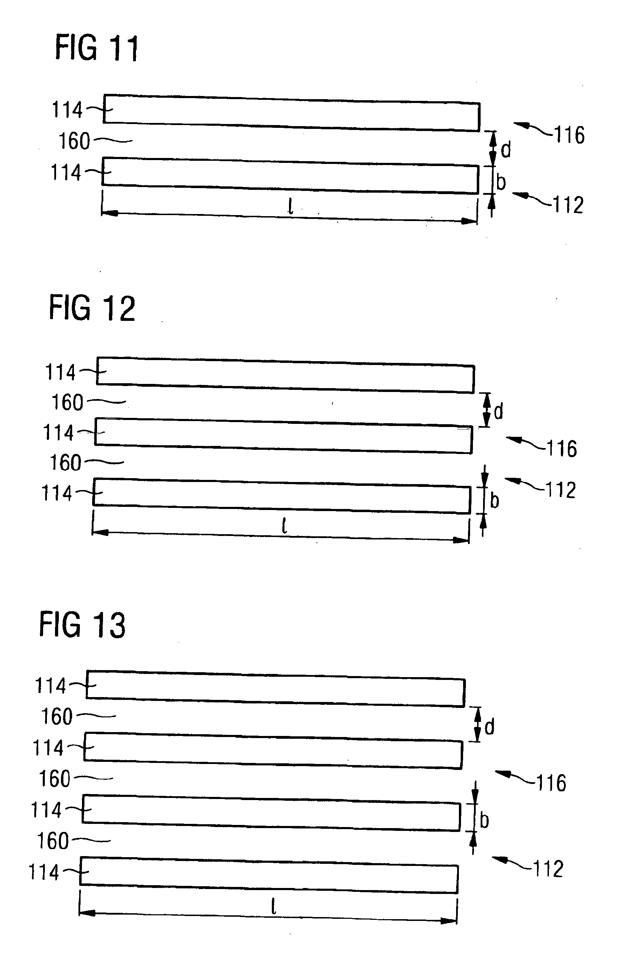

Fig. 11 zeigt eine zweite Ausführungsform einer Schlitzanordnung 116 mit zwei Schlitzen 114. Die zwei Schlitze 114 sind parallel zueinander ausgerichtet, wobei dazwischen ein Steg 160 mit der Stegbreite d gebildet ist. Vorzugsweise beträgt die Schlitzbreite jeweils ca. 6 mm und die Schlitzlänge jeweils ca. 140 mm, und der Schlitzabstand beträgt ca. 20 mm. Somit ist eine Schlitzkombination mit zwei Schlitzen gebildet.

Fig. 12 zeigt eine Schlitzkombination mit drei Schlitzen.

Vorzugsweise sind die drei Schlitze 114 der in Fig. 12 dargestellten Schlitzanordnung 116 parallel und ausgerichtet zueinander angeordnet, wobei zwei der Stege 160, jeweils ebenfalls mit der Länge von ca. 140 mm und der Breite von ca. 20 mm ausgebildet sind. Die Dimensionen der Schlitze 114 sind vorzugsweise wiederum ca. 6 mm Schlitzbreite und ca. 140 mm Schlitzlänge.

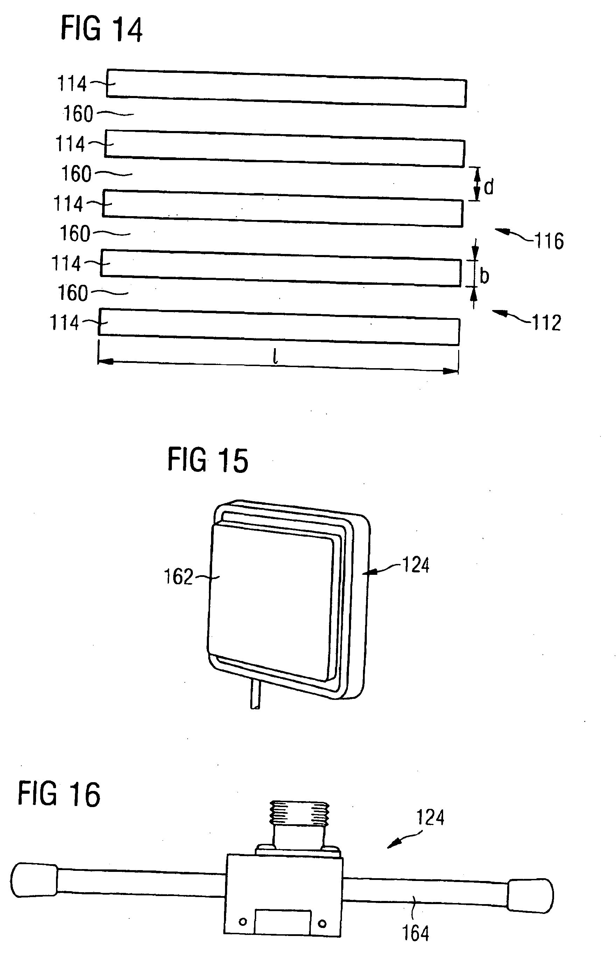

Fig. 13 zeigt eine entsprechende Schlitzanordnung mit vier Schlitzen 114; und Fig. 14 zeigt eine entsprechende Schlitzanordnung 116 mit fünf Schlitzen 114. Stegbreite, Schlitzbreite, Schlitzlänge sowie Ausrichtung und parallele Anordnung sind entsprechend wie bei den anderen Schlitzanordnungen 116 vorgesehen.

Die in den Fig. 10 bis 14 dargestellten Schlitzkombinationen und Schlitzanordnungen 116 unterscheiden sich bezüglich der Breite und der Höhe des Erfassungsbereiches. Empirische Versuche haben gezeigt, dass Schlitzkombinationen mit einer ungeradzahligen Anzahl von Schlitzen besser zu wirken scheinen als solche mit einer geradzahligen Anzahl.

Daher ist eine Schlitzanordnung 116 mit einer ungeradzahligen Anzahl von Schlitzen 114 bevorzugt.

Am meisten bevorzugt ist eine Schlitzanordnung 116 mit drei Schlitzen. Die Kombination aus drei Schlitzen 114 stellt einen guten Kompromiss zwischen der Forderung nach einer möglichst geringen mechanischen Schwächung der Bodenplatte 142 und einer möglichst geringen Zahl an Antennen 124 dar.

Fig. 15 und 16 zeigen zwei mögliche Ausführungsformen von als Boden-Antennen 124 einsetzbaren Antennen. Die gezeigten Antennen sind auf dem Markt erhältlich und grundsätzlich für sich bereits bekannt. Fig. 15 zeigt eine Patch-Antenne 162, und Fig. 16 zeigt eine Dipol-Antenne 164.

Die Patch-Antenne 162 ist beispielsweise eine UHF-Patch-Antenne, die zirkular polarisiert strahlt. Der Öffnungswinkel kann ca. 100°, zirkular polarisiert, betragen. Die Größe kann z.B. 170 x 170 mm betragen, allgemein beträgt die Größe ca. $\lambda/2$ x $\lambda/2$, wobei $\lambda$ die Wellenlänge der verwendeten RFID-Signale ist. Die Leistung kann beispielsweise ca. 2,0 Watt betragen. Ein Anschluss ist z.B. über eine SMA-Buchse möglich. Solche Antennen sind in der Schutzart IP 65 auf dem Markt erhältlich.

Die in Fig. 16 dargestellte Dipol-Antenne hat insbesondere eine Größe von $\lambda/2$, beispielsweise beträgt die Größe ca. 170 mm. Auch hier kann eine Leistung von 2,0 Watt gegeben sein. Als Anschluss ist beispielsweise eine N-Buchse möglich.

Insbesondere ist die Dipol-Antenne ein $\lambda/2$-Dipol, der linear polarisiert abstrahlt.

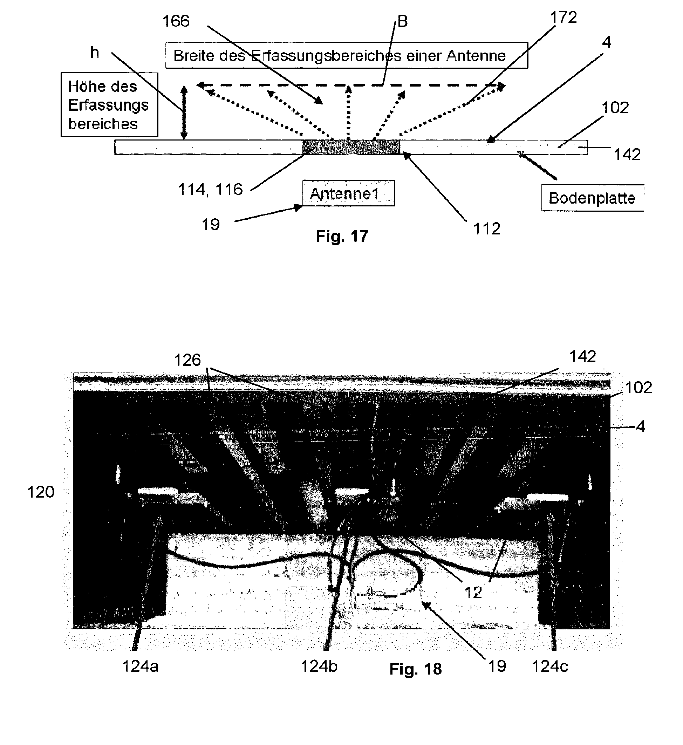

Der Erfassungsbereich einer Antenne 124 wird im Folgenden anhand der schematischen Darstellung in Fig. 17 näher erläutert. In Fig. 17 ist die Bodenplatte 142 mit dem Signaldurchlassbereich 112 und der Antenne 124 zusammen mit dem Erfassungsbereich 166 der Antenne dargestellt. Der Erfassungsbereich 126 hat eine Höhe h und eine Breite b.

In Abhängigkeit von der eingesetzten Antenne 124 lässt sich die Höhe h und die Breite b des Erfassungsbereiches 166 einstellen. Beim Einsatz von Antennen 124, die ein sehr gerichtetes Antennenfeld erzeugen, wie z.B. die Patch-Antennen 162, ist die erreichbare Breite b des Erfassungsbereiches 166 geringer als bei Dipol-Antennen 164.

Ist der Erfassungsbereich 166 sehr breit angelegt, dann lässt sich mit wenigen Antennen 124 eine Ladebrücke 102 vollständig abdecken. Die Höhe h des Erfassungsbereiches 166 bestimmt den Abstand, den eine Palette 108 mit Transponder 140 beim Transport über die Ladebrücke 102 maximal haben sollte, um sicher mit der RFID-Antenne 124 erfasst zu werden.

Empirische Versuche haben gezeigt, dass zur vollständigen Feldabdeckung einer Ladebrücke 102 mit einer Breite von ca. 200 cm, ca. drei Schlitzkombinationen mit jeweils drei Einzelschlitzen 114, wobei jede Schlitzkombination mit jeweils einer Antenne 124 bestückt ist, ausreichen.

Fig. 18 zeigt die Anordnung der drei Antennen 124 in einer Ansicht auf die Ladebrücke 102 von unten. Es ist eine erste Antenne 124a, eine zweite Antenne 124b und eine dritte Antenne 124c dargestellt. Zu jeder der Antennen 124a, 124b, 124c gehört eine Schlitzanordnung 116, die oberhalb der Antenne 124 angeordnet ist. Fig. 18 zeigt demnach den Blick unter die Ladebrücke 102 mit drei Antennen 124a, 124b, 124c.

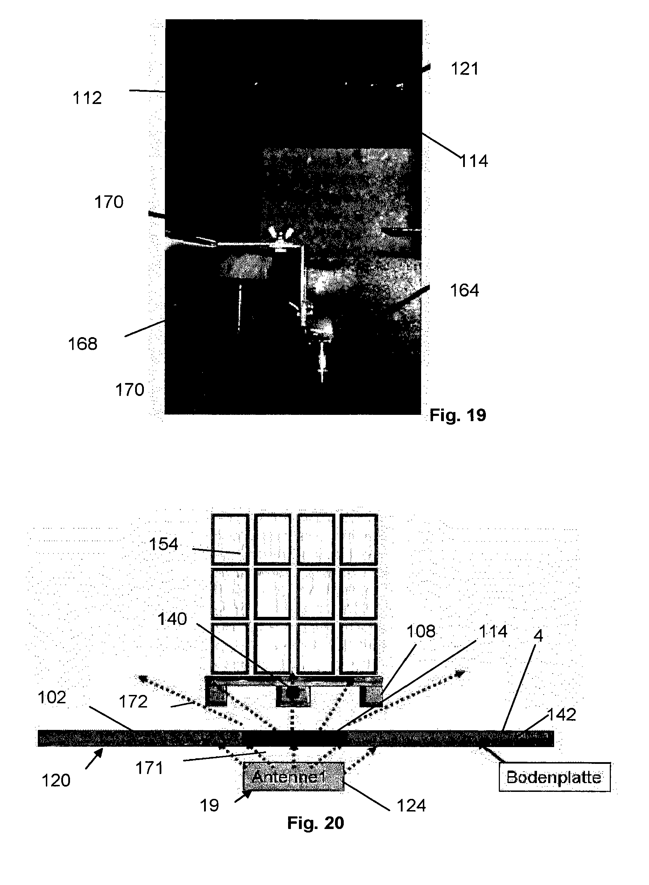

Im Folgenden wird eine Antennenabstimmung anhand der Darstellung in Fig. 19 näher erläutert. Fig. 19 zeigt die Schlitzanordnung 116 mit Verstärkungselement 121. Weiter ist die Befestigungsanordnung 122 in der Darstellung von Fig. 19 mit einer einstellbaren Befestigungseinrichtung 168 versehen, so dass die Lage der Antenne 124 in wenigstens zwei Richtungen einstellbar ist. Die einstellbare Befestigungseinrichtung 168 weist eine Verschiebeeinheit 170 auf. Als Antenne ist hier eine Dipol-Antenne 164 eingesetzt, die Schlitzanordnung 116 weist drei einzelne Schlitze 114 auf.

Allgemein wird die Antenne 124 unter der jeweiligen Schlitzanordnung 116 über ein Anschlusskabel von einer RFID-Steuereinheit gespeist. Vorzugsweise wird die Antenne 124 über ein Koaxial-Kabel von einem UHF-Reader als Steuereinheit gespeist.

Um eine optimale Leistungsübertragung zwischen Antenne 124 und Steuereinheit zu erreichen, sollten die Ausgangsimpedanz der RFID-Steuereinheit auf die Impedanz des Kabels und die Impedanz des Kabels an die Eingangsimpedanz der Antenne 124 abgestimmt werden.

In empirischen Versuchen ist zu beobachten, dass die in Metall ausgeführte Schlitzkombination oder Schlitzanordnung 116 auf die Impedanz der Antenne 124 rückwirken kann. Mit anderen Worten kann sich die Antennenimpedanz verglichen zu der Impedanz einer gleichen Antenne, die frei montiert ist, ändern. Aus diesem Grunde kann es vorteilhaft sein, zwischen Kabel und Antenne eine Impedanzanpassung mit einem Anpassglied durchzuführen. Solche Anpassglieder kommen in der UHF-Technik häufig vor.

Ein Abgleich aller Komponenten erfolgt vorzugsweise gemäß dem im Folgenden erläuterten Verfahren:

Schritt 1: verschiebbares Montieren der Antenne 124 unter der Schlitzanordnung 116;

Schritt 2: Verschieben der Antenne vertikal zu der Schlitzanordnung 116 (Verändern der vertikalen Entfernung zu der Schlitzkombination) und Verschieben der Antenne horizontal zu der Schlitzanordnung 116, um den Montagepunkt mit dem im besten Erfassungsbereich 166 zu finden;

Schritt 3: Überprüfen mittels eines Impedanzmessgeräts, ob das Anpassglied die Impedanz der Antenne an die Impedanz des Kabels angleicht.

Im Folgenden wird anhand der Fig. 20 die Ausnutzung des Huygens'schen Prinzips erläutert.

In Fig. 20 ist die praktische Erfassung der Palette 108 mit RFID beim Einsatz einer Schlitzkombination - beispielsweise der Schlitzanordnung 116 - zu sehen. Fig. 20 zeigt die Bodenplatte 142 mit dem Signaldurchlassbereich 112, der mehrere Schlitze 114 aufweist und die Antenne 124 unterhalb des Signaldurchlassbereiches 112. Außerdem ist der Erfassungsbereich 171 der Antenne 124 unterhalb der Bodenplatte 142 sowie der Erfassungsbereich 166 der Antenne oberhalb der Bodenplatte 142 dargestellt. Es ist die Erfassung der Palette 108 mit Waren 154 mittels des Transponders 140 dargestellt.

Die einzelnen Schlitze 114 der Schlitzkombinationen 116 sind so ausgeführt, dass sie die Funktion eines Sekundärstrahlers übernehmen können. Die von dem Primärstrahler, dies ist insbesondere die Antenne 124 unterhalb der Schlitzkombination 116, emittierten elektromagnetischen Wellen 172 treffen auf die verglichen mit der Wellenlänge der elektromagnetischen Welle genügend schmalen Schlitze 114 auf. Jeder Schlitz verhält sich dann wie ein Sender, der eigene Wellen abgeben kann. Dies erfolgt gemäß dem Huygens'schen Prinzip. Allgemein ist das Huygens'sche Prinzip beispielsweise in Gerthsen, Kneser, Vogel: "Physik", Springer Verlag; Berlin, Heidelberg, New York; 13. Auflage, 1977, näher dargestellt.

Würde man auf diesen positiven Effekt verzichten wollen, wären die elektromagnetischen Wellen auf andere Art und Weise zur Verfügung zu stellen. Die Bodenplatte 142 müsste durch einen sehr langen Schlitz geöffnet werden, der einen ungehinderten Durchtritt der von der Bodenantenne direkt ausgestrahlten Wellen ermöglichen soll. Damit würde die Bodenplatte 142 mechanisch sehr geschwächt und die Antenne 124 müsste entsprechend aufwändig geschützt werden, um ein Einbrechen der Flurförderfahrzeuge 108 zu verhindern.

Für die in Europa verwendeten RFID-Frequenzen wurden bezüglich Schlitzen 114 in sehr dicken Metallplatten im UHF-Bereich eine Länge von ca. 140 mm und eine Breite von ca. 6 mm als optimal ermittelt.

Aus der Physik weiß man gemäß dem Huygens'schen Prinzip: "Trifft eine ebene Welle auf einen Schirm, in dem sich eine Öffnung befindet, deren Durchmesser klein im Vergleich zur Wellenlänge ist, so breitet sich hinter dem Schirm um die Öffnung als Zentrum eine Kugelwelle aus."

Allerdings wird bei der Erläuterung des Huygens'schen Prinzips die Öffnung immer in unendlich dünnen Materialien ausgeführt; bei dem Einsatz in Bodenplatten 142 von Ladebrücken 102 oder dergleichen sind Plattendicken von 8 mm oder auch mehr möglich. Die aus Stabilitätsgründen aufgeschweißten Verstärkungselemente 121 sind z.B. 10 mm dick, so dass insgesamt ein Spalt in einem 18 mm dicken Material zum Einsatz kommt.

Als Faustformel für die Schlitzlänge kann daher verwendet werden:

$$l = a \cdot \lambda/2,$$

wobei $l$ die Schlitzlänge, $a$ ein Abschlagsfaktor und $\lambda$ die Wellenlänge der RFID-Signale ist. Besonders geeignete Werte für den Abschlagsfaktor sind: $0{,}5 < a < 1$.

Die Schlitzbreite sollte möglichst klein sein.

Die Antenne 124 als Primärstrahler unterhalb der Schlitzkombination kann zirkular polarisiert, z.B. wie bei der Patch-Antenne 162, oder linear polarisiert, z.B. wie bei der Dipol-Antenne 164, sein. Unabhängig davon wirken die Schlitze 114 wie Polarisationsfilter. Dies bedeutet, dass die Schlitzkombination als Sekundärstrahler unabhängig von der Anregung mit linearer Polarisation strahlt.

Wird eine Dipol-Antenne 164 verwendet, so wird diese vorzugsweise im Wesentlichen quer zur Länge der Schlitze 114 angeordnet.

Die Fig. 21 zeigt einen entsprechenden Dipol vor einer Schlitzanordnung 116 mit den aufgeschweißten Verstärkungen (z.B. Verstärkungselement 121).

Fig. 22 zeigt als weiteres Ausführungsbeispiel für die Bauwerkszugangsvorrichtung 1 ein Tor 200, welches ein Torblatt 202 und eine Zarge 204 aufweist. Das Torblatt 202 dient zum Öffnen und Schließen einer durch die Zarge 204 umrandeten Toröffnung 206, durch welche der Fahrweg 5 führt.

Die Zarge 204 weist zwei Seitenzargenholme 208, 210 sowie einen oberen Zargenholm 212 auf. Weiter weist das Tor 200 ein Schwellenelement 214 auf.

Die Bauelemente 204, 202, 214 des Tors 200 sind in den dem Fahrweg 5 zugewandten Bereichen aus Metall ausgeführt. In wenigstens einem dieser Metallbereiche ist wenigstens einer der Signaldurchlassbereiche 112, 24 gebildet, wobei hinter diesem Metallbereich 4 die RFID-Sende- und/oder Empfangseinheit 19 ausgebildet ist. Insbesondere sind die einzelnen Zargenholme 208, 210, 212 mit Signaldurchlassbereichen und dahinter angeordneten Antennen 124 versehen. Die Zarge 204 wirkt somit selbst als Antennengate 144, jedoch ohne zusätzliche Träger vorsehen zu müssen, wobei die Antennen geschützt hinter den Metallbereichen 4 des Tores 200 vorgesehen sind.

In Fig. 23 ist ein weiteres Tor 300 als weiteres Ausführungsbeispiel der Bauwerkszugangsvorrichtung 1 in Form eines Rolltores gezeigt, wobei die RFID-Sende- und/oder Empfangseinheit 19 an einem Schließkantenelement 304 des Torbehangs 302 untergebracht ist und durch einen äußeren Metallbereich 4 geschützt ist. Auch hier ist der Metallbereich 4 mit dem Signaldurchlassbereich 112, 24 versehen.

Fig. 24 zeigt eine Tür 400 als weiteres Ausführungsbeispiel der Bauwerkszugangsvorrichtung 1 mit Türblatt 402 und Türzarge 404. Das Türblatt 402 und die Türzarge 404 sind mit Metallbereichen 4 mit Signaldurchlassbereich 24 und Sende- und/oder Empfangseinheit 19 versehen.

Figur 25 zeigt ein Ausführungsbeispiel zum Anschließen der RFID-Empfangs-/ oder Sendeeinheit 19.

Die hier allgemein mit 452 bezeichnete Ladebrücke einer Ladestelle 410 weist das aus dickem Metallblech gebildete Plateau 30 und die darin integrierte RFID-Empfangs-/ oder Sendeeinheiten 19 mit Schlitzanordnung und RFID-Antenne 20 auf. Die Ladebrücke 452 ist motorisch angetrieben bewegbar; hierzu sind zwei Ladebrückenantriebseinheiten 454, 456 dargestellt, die das Plateau 30 in horizontaler bzw. vertikaler Richtung bewegen können, um Höhenunterschiede zur einem zu be- oder entladendem Fahrzeug auszugleichen. Weiter ist die Verladestelle 410 mit einem Tor 458 verschließbar, welches über eine Torantriebseinrichtung 460 automatisch auf und zugefahren werden kann.

Die Ladebrückenantriebseinheiten 454, 456 und die Torantriebseinheit 460 sind mit einer Steuereinrichtung 450 verbunden, die eine Bewegung der Ladebrücke 452 und des Tores 458 steuert. Die Steuereinrichtung 450 kann als Torantriebs- und Ladebrückensteuerung ausgebildet sein. Die Steuereinrichtung 450 ist an einer Gebäudeleittechnik 462 angeschlossen, so dass Betrieb und/oder Zustand vom Tor oder Ladebrücke 452 auch zentral in der Gebäudeleittechnik überacht werden kann. Beispielsweise kann über die Gebäudeleittechnik festgestellt werden, ob das Tor 458 an einer von mehreren Verladestellen 410 noch offen steht oder nicht.

Derartige Steuerungen zur Steuerung der Ladebrücke 452 und/oder eines zugeordneten Tores 458 sind grundsätzlich bereits bekannt; bei der in Figur 25 dargestellten Ausgestaltung der Steuereinrichtung 450 ist jedoch nicht nur eine oder mehrere Antriebeinheit 454, 456 für die Ladebrücke und/oder eine oder mehrere Antriebseinheiten 460 für das Tor 458 angeschlossen; vielmehr ist die Steuereinrichtung 450 im gleichen Gehäuse oder in einem zusätzlichen Gehäuse durch eine RFID-Elektronik 462 erweitert.

Die Steuereinrichtung 450 weist Steuer- und/oder Überwachungsmittel 464 für das Tor 458, Steuer- und/oder Überwachungsmittel 466 für die Ladebrücke 452 und eine RFID-Elektronik 462 auf. Jede dieser Einheiten der Steuereinrichtung 450 kann über die Gebäudeleittechnik 461 angesteuert werden (beispielsweise Bus-Systeme oder ein lokales Datennetzwerk, drahtgebunden oder drahtlos z.B. WLAN).

Die Steuereinrichtung 450 weist in einer bevorzugten Ausgestaltung noch eine RFID-Schnittstelle 68 auf, an der ein RFID- gestütztes Warenüberwachungssystem 470 anschließbar ist. Die RFID-Elektronik 462 kann beispielsweise einen RFID-Reader enthalten. Der RFID-Reader kann alternativ aber auch in dem Warenüberwachungssystem 470 vorhanden sein, wobei in der RFID-Elektronik 462 lediglich Antennenschnittstellen zum Anschließen der RFID-Antennen 420 vorgesehen sind.

Wenngleich die anhand der Darstellungen in den Fig. 2 bis 21 erläuterten Ausführungsformen für die RFID-Antennenanordnungen und Signaldurchlassbereiche bevorzugt sind, sind auch andere Anordnungen denkbar. Es sind unterschiedliche Signaldurchlassbereiche 474 und unterschiedliche RFID-Antennen 20 möglich. Mögliche unterschiedliche Ausgestaltungen sind schematisch in Figur 26 näher dargestellt, die als theoretisches Ausführungsbeispiel ein zum Bilden der Ladebrücke 452 geeignetes Blech 422 und unterschiedliche Ausführungsformen von RFID-Antennenanordnungen 472, 474, 476, 478, 480, 482 aufweist. In bevorzugter Ausgestaltung ist in einer Ladebrücke 452 nur einer dieser unterschiedlicher Typen von Antennenanordnungen ausgewählt und mehrfach über die Ladebrücke verteilt vorhanden.

Die alternative Antennenanordnung kann z.B. aus folgender Gruppe von möglichen Antennenanordnungen ausgewählt sein:

- Erste Antennenanordnung 472: Schlitzantenne mit Ankopplung, wie sie vom Aufbau und der Struktur her in der WO 01/37215 A1 am Beispiel für einen Transponder erläutert ist;
- zweite Antennenaordnung 474: Schlitzantenne mit mehreren Einzelschlitzen, wie sie von der Struktur und der Verfahrensweise her in der WO 2009/012796 A1 beschrieben und erläutert ist;
- dritte Antennenanordnung 476: RFID-Schlitzantenne, wie sie in der DE 10 2007 061 707 A1 in unterschiedlichen Ausgestaltungen am Beispiel einer Gabelstaplergabel erläutert ist;
- vierte Antennenanordnung 478: Antennenanordnung, wie sie in der DE 20 2007 019 033 U1 sowie der WO 2008/122831 A1 am Beispiel eines Metallgehäuses mit darin befindlicher Antenne beschrieben und dargestellt worden ist;
- fünfte Antennenanordnung 480: Schlitzantennenanordnung wie sie in der WO 2005/116945 A2 am Beispiel eines Regalbodens für Lager erläutert und gezeigt worden ist; und
- sechste Antennenanordnung 482: Schlitzantenne, wie sie in der WO 2007/140800 A1 am Beispiel eines metallenen Lagerregals erläutert und gezeigt worden ist.

Es wird für weitere Einzelheiten zu den einzelnen Antennenanordnungen 472 bis 482 ausdrücklich auf die vorerwähnten Druckschriften verwiesen, die Teil der hiesigen Offenbarung darstellen. Der Inhalt dieser Druckschriften wird hiermit durch Bezugnahme inkorporiert.

Ein wesentlicher Vorteil der Einbindung der RFID in eine Ladebrücke ist, dass außer dem ohnehin notwendigen Einbau der Ladebrücke in ein Gebäude keine weiteren baulichen Maßnahmen mehr durchgeführt werden müssen. Die Ladebrücke kann bereits im Herstellwerk entsprechend mit den Antennenanordnungen versehen werden; auch die Steuereinrichtung 450 kann entsprechend vorbereitet sein. Im Folgenden kann dann die Montage sowohl der Ladebrücke als auch der Antennenanordnungen gleichzeitig durch das gleiche Personal vor Ort erfolgen. Dadurch lässt sich besonders einfach die RFID-Technik an den einzelnen Docks vorsehen.

Durch die Einbindung der RIFD-Technik in Steuereinrichtungen für Ladedock oder Tor lässt sich Verdrahtungsaufwand verringern und eine einfache Integration in Gebäudeleittechnik realisieren.

**Bezugszeichenliste:**

| | |
|---|---|
| 1 | Bauwerkszugangsvorrichtung |
| 2 | Durchgangsweg |
| 3 | Bauwerk |
| 4 | Metallbereich |
| 5 | Fahrweg |
| 10 | Verladestelle |
| 11 | Dock |
| 12 | Gebäude |
| 13 | Ladebrücke |
| 14 | Vorschubladebrücke |
| 18 | Klappkeilladebrücke |
| 19 | RFID-Empfangs- und/oder Sendeeinheit |
| 20 | RFID-Antenne |
| 22 | Blech |
| 24 | Signaldurchlassbereich |
| 26 | Einzelschlitze |
| 28 | Schlitzgruppe |
| 30 | Plateau |
| 31a | Oberfläche |
| 31b | Unterseite |
| 32 | Detektionseinrichtung |

| | |
|---|---|
| 34 | Radarbewegungsmelder |
| 36 | Abschirmeinrichtung |
| 38 | Kunststofftor |
| 40 | Kunststoffvorhang |
| 100 | Ladestelle |
| 102 | Ladebrücke |
| 104 | Tor |
| 106 | Flurförderfahrzeug |
| 108 | Paletten |
| 110 | Ladungsträger |
| 112 | Signaldurchlassbereich |
| 114 | Schlitz |
| 116 | Schlitzanordnung |
| 118 | Kunststoffeinlagen |
| 120 | Unterseite |
| 121 | Verstärkungselement |
| 121a | Metallplattenverstärkung |
| 122 | Befestigungsanordnung |
| 124 | Antenne |
| 124a | erste Antenne |
| 124b | zweite Antenne |
| 124c | dritte Antenne |
| 126 | Verstärkungsrippe |
| 128 | T-Profil |
| 130 | Längsträger |
| 132 | Paletten-Längsträger |
| 140 | Transponder |
| 142 | Bodenplatte |
| 144 | Antennengate |
| 146 | linker Träger |
| 148 | rechter Träger |
| 150 | Querträger |
| 152 | Antenne |
| 154 | Waren |
| 160 | Steg |
| 162 | Patchantenne |
| 164 | Dipolantenne |
| 166 | Erfassungsbereich |
| 168 | einstellbare Befestigungseinrichtung |
| 170 | Verschiebeeinheit |
| 171 | Erfassungsbereich |
| 172 | elektromagnetische Wellen |
| 200 | Tor |
| 202 | Torblatt |
| 204 | Zarge |
| 206 | Toröffnung |
| 208 | Seitenzargenholm |
| 210 | Seitenzargenholm |
| 212 | oberer Zargenholm |
| 214 | Schwellenelement |
| 300 | Tor |
| 302 | Torbehang |
| 304 | Schließkantenelement |
| 400 | Tür |
| 402 | Türblatt |
| 404 | Türzarge |
| 410 | Verladestelle |
| 450 | Steuereinrichtung |

| 452 | Ladebrücke |
| 454 | Ladebrückantriebseneinheit |
| 456 | Ladebrückenabtriebseinheit |
| 458 | Tor |
| 460 | Torantriebseinheit |
| 461 | Gebäudeleittechnik |
| 462 | RFID-Elektronik |
| 464 | Steuer- und/oder Überwachungsmittel |
| 466 | Steuer - und/oder Überwachungmittel |
| 468 | RFID-Schnittstelle |
| 470 | Warenüberwachungssystem |
| 472 | erste Antennenanordnung |
| 474 | zweite Antenneanordnung |
| 476 | dritte Antennenanordnung |
| 478 | vierte Antennenanordnung |
| 480 | fünfte Antennenanordnung |
| 482 | sechste Antennenanordnung |
| d | Schlitzabstand |
| h | Höhe des Erfassungsbereichs |
| B | Breite des Erfassungsbereichs |
| l | Schlitzlänge |
| b | Schlitzbreite |

**Patentansprüche**

1. Bauwerkszugangsvorrichtung (1), zum Schaffen eines Durchgangswegs (2) zum Ein- oder Ausbringen von Waren (154) oder Gütern in ein oder aus einem Bauwerk (3), **dadurch gekennzeichnet, dass** die Bauwerkszugangsvorrichtung (1) als Tür (400), als Tor (300, 200) oder als Ladedock (11) ausgebildet ist und einen dem Durchgangsweg (2) zuzuwendenden Metallbereich (4) aufweist, wobei der Metallbereich (4) auf der dem Durchgangsweg abzuwendenden Seite mit einer RFID-Sende- oder Empfangseinrichtung (19) und mit einem SIgrialdurchlassbereich (24, 112) zum Durchlassen von RFID-Signalen zu oder von der RFID-Sende- oder Empfangseinrichtung (19) von bzw. zu dem Durchgangsweg (2) versehen ist.

2. Bauwerkszugangsvorrichtung (1) nach Anspruch 1,
**dadurch gekennzeichnet**,

   2.1 dass der Metallbereich (4) als Boden oder als Teil eines Bodens des Durchgangswegs (2) und insbesondere als Fahrweg (5) für Fahrzeuge (108), insbesondere Flurförderfahrzeuge, ausgebildet ist und/oder
   2.2 dass der Metallbereich (4) durch eine Metallplatte (142) und/oder ein Metallblech (22) gebildet ist.

3. Bauwerkszugangsvorrichtung (1) nach einem der voranstehenden Ansprüche,
**dadurch gekennzeichnet,**
**dass** die Bauwerkszugangsvorrichtung (1) als Ladedock (11) zum Andocken eines Transportfahrzeugs an ein Bauwerk (3) mit einem Plateau (30) ausgebildet ist, über welches Waren (154) oder Güter aus dem Transportfahrzeug über das Ladedock (11) zu dem Bauwerk (3) und/oder umgekehrt von dem Bauwerk (3) in das Transportfahrzeug zu transportieren sind, wobei das Plateau (30) den mit der RFID-Empfangs- und/oder Sendeeinheit (19) versehenen Metallbereich (4) aufweist.

4. Bauwerkszugangsvorrichtung (1) nach Anspruch 3,
**dadurch gekennzeichnet,**
**dass** das Plateau (30) eine Ladebrücke (13, 14, 18, 102) oder Laderampe aufweist, die zumindest teilweise aus Metall gebildet sind und mit der RFID-Empfangs- und/oder Sendeeinheit (19) versehen sind.

5. Bauwerkszugangsvorrichtung (1) nach Anspruch 4,
**dadurch gekennzeichnet,**
**dass** die Ladebrücke (13, 14, 18, 102) zumindest teilweise beweglich, insbesondere als Vorschubladebrücke (14) und/oder als Klappkeilladebrücke (18) ausgeführt ist.

6. Bauwerkszugangsvorrichtung (1) nach einem der voranstehenden Ansprüche,
**dadurch gekennzeichnet,**
**dass** der Signaldurchlassbereich (24, 112) wenigstens eine Durchbrechung, eine Öffnung, einen Schlitz (114) und/oder eine Schlitzanordnung (116) in dem Metallbereich (4) aufweist.

7. Bauwerkszugangsvorrichtung (1) nach einem der voranstehenden Ansprüche,
**dadurch gekennzeichnet,**
**dass** wenigstens eine seitliche Abschirmeinrichtung (36) zur Abschirmung gegen Signalübertragungen von und zu benachbarten Bauwerkszugangsvorrichtungen (1) vorgesehen ist.

8. Bauwerkszugangsvorrichtung (1) nach Anspruch 7,
**dadurch gekennzeichnet,**
**dass** die Abschirmeinrichtung (36) einen flexiblen Behang aus oder mit einer Metallabschirmung und/oder einem Metallgeflecht, insbesondere einen Kunststoffbehang mit einer Drahtabschirmung, aufweist.

9. Zumindest teilweise aus Metall gebildetes Bauelement zum Bilden eines Teils einer Bauwerkszugangsvorrichtung (1) nach einem der voranstehenden Ansprüche, **dadurch gekennzeichnet, dass** das Bauelement eine Ladebrücke (13, 14, 18, 102), ein Türelement (402, 404), ein Torelement (202, 204, 208, 210, 212, 214, 304), eine Zarge (204, 404), ein Türblatt (402), ein Torblatt (202) oder ein Tür- oder Torschwellenelement (214) zum Bilden einer Tür- oder Torschwelle ist, wobei wenigstens ein Metallbereich (4) des Bauelements (13, 14, 18, 102, 142, 202, 204, 208, 210, 212, 214, 304, 402, 404), zum Begrenzen oder Definieren eines Durchgangswegs (2) für Waren (154), Fahrzeuge (108) oder Güter vorgesehen ist, wobei eine RFID-Sende- und/oder Empfangseinheit (19) auf einer dem Durchgangsweg (2) abgewandten Seite des Metellbereichs (4) und ein Signaldurchlassbereich (24, 112) zum Durchlassen von RFID-Signalen durch den Metallbereich (4) hindurch von dem Durchgangsweg zu der RFID-Sende- und/oder Empfangseinheit und/oder umgekehrt vorgesehen sind.

10. Bauelement (13, 14, 18, 102, 142, 202, 204, 208, 210, 212, 214, 304, 402, 404), nach Anspruch 9,
**dadurch gekennzeichnet,**
**dass** der Signaldurchlassbereich (24, 112) wenigstens eine Durchbrechung, eine Öffnung, einen Schlitz (26, 114) oder eine Schlitzanordnung (116) in dem Metallbereich (4) aufweist.

11. Bauelement (13, 14, 18, 102, 142, 202, 204, 208, 210, 212, 214, 304, 402, 404), nach Anspruch 10,
**dadurch gekennzeichnet,**
**dass** die Durchbrechung, die Öffnung, der Schlitz (26, 114) bzw. die Schlitzanordnung (116) mit einem elektrisch nichtleitenden Material verschlossen sind.

12. Bauelement (13, 14, 18, 102, 142, 202, 204, 208, 210, 212, 214, 304, 402, 404), nach Anspruch 10 oder 11,
**dadurch gekennzeichnet,**
**dass** die Durchbrechung, die Öffnung, der Schlitz bzw. die Schlitzanordnung eine Breite von ca. 1 bis ca. 20 mm und eine Länge von ca.10 mm bis ca. 500 mm haben.

13. Bauelement nach einem der voranstehenden Ansprüche,
**dadurch gekennzeichnet**,

    13.1 dass das Bauelement zum Überfahren und/oder zum Tragen von Flurförderfahrzeugen (108) zwecks Waren- oder Gütertransport ausgebildet ist und/oder
    13.2 eine Metallplatte als Metallbereich aufweist, die auf der dem Durchgangsweg abzuwendenden Seite mit vorstehenden Verstärkungsrippen und/oder einem den Signaldurchlassbereich (24, 112) noch einmal verstärkenden und/oder versteifenden Verstärkungselement (121) versehen ist.

14. Bauelement nach einem der voranstehenden Ansprüche, insbesondere ausgebildet als Ladebrücke,
**dadurch gekennzeichnet,**
**dass** wenigstens eine Antriebseinheit (454, 56) zum motorischen Antreiben einer Bewegung des Bauelements und eine Steuereinrichtung (450) mit Steuer- und/oder Überwachungsmittel (466) für die Antriebseinheit (454, 456) vorgesehen sind, wobei die Steuereinrichtung (450) eine RFID-Elektronik (462) zum Anschließen der RFID-Sende- oder Empfangseinrichtung (19) aufweist.

15. Bauelement nach Anspruch 14,

**dadurch gekennzeichnet,**
**dass** die RFID-Elektronik (462) und die Steuer- und/oder Überwachungsmittel (466) in einem gemeinsamen Steuerungsgehäuse untergebracht sind.

**Claims**

1. Construction access structure (1) for forming a passageway (2) for the delivery or removal of products (154) or goods to and from a construction (3), **characterized in that** said construction access structure (1) is configured as a door (400), a gate (300, 200) or as a cargo block (11) and includes a metal zone (4) to be turned towards said passageway (2), said metal zone (4), on the side thereof to be turned away from passageway (2), being provided with an RFID transmitting or receiving unit (19) and with a signal passage region (24, 112) allowing RFID signals to or from said RFID transmitting or receiving device (19) to pass to or from said passageway (2).

2. Construction access structure (1) according to claim 1,
   **characterized in that**

   2.1 said metal zone (4) is designed as a floor or as a part of a floor of said passageway (2) and particularly as a driveway (5) for vehicles (108), particularly floor-borne vehicles, and/or
   2.2 said metal zone (4) is formed by a metal plate (142) and/or a sheet metal (22).

3. Construction access structure (1) according to one of the preceding claims, **characterized in that** said construction access structure (1) is designed as a cargo block (11) for docking a transport vehicle to a construction (3) having a plateau (30), wherein products (154) or goods are to be transferred via said plateau from the transport vehicle via cargo block (11) to the construction (3) and/or vice versa from the construction (3) to the transport vehicle, said plateau (30) including said metal zone (4) that is provided with said RFID transmitting and/or unit (19).

4. Construction access structure (1) according to claim 3,
   **characterized in that** said plateau (30) includes a loading bridge (13, 14, 18, 102) or loading ramp at least partly made of metal and provided with said RFID receiving and/or transmitting unit (19).

5. Construction access structure (1) according to claim 4,
   **characterized in that** said loading bridge (13, 14, 18, 102) is designed so as to be at least partly movable, particularly as a feed-type loading bridge (14) and/or a dock leveller (18).

6. Construction access structure (1) according to one of the preceding claims, **characterized in that** said signal passage region (24, 112) at least includes a through-hole, an opening, a slot (114) and/or a slot arrangement (116) within said metal zone (4).

7. Construction access structure (1) according to one of the preceding claims, **characterized in that** there is provided at least one lateral shielding device (36) for shielding against signal transmissions from and to adjacent construction access structures.

8. Construction access structure (1) according to claim 7, **characterized in that** said shielding device (36) includes flexible hangings made of or comprising a metal shield and/or a metal braiding, particularly plastic hangings having a wire shield.

9. Construction element, at least partly made of metal, forming a part of a construction access structure (1) according to one of the preceding claims, **characterized in that** said construction element is a loading bridge (13, 14, 18, 102), a door element (402, 404), a gate element (202, 204, 208, 210, 212, 214, 304), a door frame (204, 404), a door leaf (402), a gate leaf (202) or a door or gate sill element (214) for forming a door or gate sill, wherein at least one metal zone (4) of said construction element (13, 14, 18, 102, 142, 202, 204, 208, 210, 212, 214, 304, 402, 404) is providing for delimiting or defining a passageway (2) for products (154), vehicles (108) or goods, wherein an RFID transmitting and/or receiving unit (19) are disposed on the side of metal zone (4) turned away from passageway (2) and wherein a signal passage region (24, 112) allowing RFID signals to pass through said metal zone (4) from said passageway to said RFID transmitting and/or receiving unit and/or vice versa.

10. Construction element (13, 14, 18, 102, 142, 202, 204, 208, 210, 212, 214, 304, 402, 404) according to claim 9, **characterized in that** said signal passage region (24, 112) at least includes a through-hole, an opening, a slot (26, 114) or a slot arrangement (116) within said metal zone (4).

11. Construction element (13, 14, 18, 102, 142, 202, 204, 208, 210, 212, 214, 304, 402, 404) according to claim 10, **characterized in that** said through-hole, opening, slot (26, 114) or said slot arrangement (116) are closed with an electrically insulating material.

12. Construction element (13, 14, 18, 102, 142, 202, 204, 208, 210, 212, 214, 304, 402, 404) according to claim 10 or 11, **characterized in that** said through-hole, opening, slot or slot arrangement have a width of approx 1 to approx 20 mm and a length of approx 10 mm to a approx 50 mm.

13. Construction element according to one of the preceding claims,
**characterized in that**

13.1 said construction element is designed for being passed by and/or for supporting floor-borne vehicles (108) for the purpose of transporting products or goods and/or
13.2 includes a metal plate or metal zone provided on the side thereof to be turned away from the passageway with protruding reinforcing ribs and/or with a reinforcing element (121) for additionally reinforcing said signal passage region (24, 112).

14. Construction element according to one of the preceding claims, particularly designed as a loading bridge, **characterized in that** there is provided at least one drive unit (454, 56) for driving a movement of said construction element by motor, and a control device (450) including control and/or monitoring means (466) for said driving unit (454, 456), wherein said control device (450) includes RFID electronics (462) for connecting said RFID receiving or transmitting unit (19).

15. Construction element according to claim 14,
**characterized in that** said RFID electronics (462) and said control and/or monitoring means (466) are accommodated in a common controller housing.


**Revendications**

1. Dispositif d'accès à un bâtiment (1) permettant de fournir un chemin de passage (2) pour permettre d'introduire ou de faire sortir des marchandises (154) ou des matériaux dans ou d'un bâtiment (3),
**caractérisé en ce que**
le dispositif d'accès (1) au bâtiment est réalisé sous la forme d'une porte (400), d'un portail (300, 200) ou d'un dock de chargement (11) et comporte une zone métallique (4) destinée à être tournée vers la voie de passage (2), cette zone métallique (4) étant équipée sur son côté devant être tourné à l'opposé du chemin de passage d'un dispositif d'émission ou de réception de signaux RFID et d'une zone de passage des signaux (24, 112) pour permettre le passage de signaux RFID vers ou à partir du dispositif d'émission ou de réception de signaux RFID (19), à partir ou vers le chemin de passage (2).

2. Dispositif d'accès à un bâtiment (1) conforme à la revendication 1, **caractérisé en ce que** :

2.1 la zone métallique (4) est réalisée sous la forme du sol ou d'une partie du sol du chemin de passage (2) et en particulier sous la forme d'un chemin de déplacement (5) pour des véhicules (108), en particulier des véhicules de manutention, et/ou
2.2 la zone métallique (4) est formée par une plaque métallique (142) et/ou une tôle métallique (22).

3. Dispositif d'accès à un bâtiment (1) conforme à l'une des revendications précédentes,
**caractérisé en ce que**
le dispositif d'accès au bâtiment (1) est réalisé sous la forme d'un dock de chargement (11) pour permettre l'accostage d'un véhicule de transport sur un bâtiment (1) muni d'un plateau (30) par l'intermédiaire duquel des marchandises (154) ou des matériaux peuvent être transportés du véhicule de transport par l'intermédiaire du dock de chargement (11) vers le bâtiment (3) et/ou inversement du bâtiment (3) dans le véhicule de transport, le plateau (30) comportant la zone métallique (4) équipée de l'unité de réception et/ou d'émission de signaux RFID (19).

**4.** Dispositif d'accès à un bâtiment (1) conforme à la revendication 3,
**caractérisé en ce que**
le plateau (30) comporte un pont de chargement (13, 14, 18, 102) ou une rampe de chargement qui est réalisé au moins partiellement en métal et est équipé de l'unité de réception et/ou d'émission (19) de signaux RFID.

**5.** Dispositif d'accès à un bâtiment (1) conforme à la revendication 4,
**caractérisé en ce que**
le pont de chargement (13, 14, 18, 102) est réalisé au moins partiellement mobile, en particulier sous la forme d'un pont de chargement d'avancement (14) et/ou d'un pont de chargement basculant (18).

**6.** Dispositif d'accès à un bâtiment (1) conforme à l'une des revendications précédentes,
**caractérisé en ce que**
la zone de passage de signaux (24, 112) comporte au moins un perçage, une ouverture, une fente (114) et/ou un dispositif de fente (116) dans la zone métallique (4).

**7.** Dispositif d'accès à un bâtiment (1) conforme à l'une des revendications précédentes,
**caractérisé en ce qu'**
il est prévu au moins un dispositif de protection latéral (36) pour assurer la protection contre la transmission de signaux à partir et vers des dispositifs d'accès au bâtiment (1) voisins.

**8.** Dispositif d'accès à un bâtiment (1) conforme à la revendication 7,
**caractérisé en ce que**
le dispositif de protection (36) comporte une tenture flexible réalisée en, ou avec une protection métallique et/ou un tissu métallique, en particulier une tenture en matériau synthétique munie d'un écran de protection en fils métalliques.

**9.** Elément de construction réalisé au moins partiellement en métal pour former une partie d'un dispositif d'accès à un bâtiment (1) conforme à l'une des revendications précédentes,
**caractérisé en ce que**
l'élément de construction est un pont de chargement (13, 14, 18, 102), un élément de porte (402, 404), un élément de portail (202, 204, 208, 210, 212, 214, 304), un bâti dormant (204, 404), un vantail de porte (402), un vantail de portail (202) ou élément de seuil de porte ou de portail (214) pour permettre de former un seuil de porte ou de portail, au moins une zone métallique (4) de l'élément de construction (13, 14, 18, 102, 142, 202, 204, 208, 210, 212, 214, 304, 402, 404) étant prévu pour délimiter ou définir un chemin de passage (2) pour des marchandises (154), des véhicules (108) ou des matériaux, une unité d'émission et/ou de réception (19) de signaux RFID étant prévue sur la face tournée à l'opposé du chemin de passage (2) de la zone métallique (4) et une zone de passage de signaux (24, 112) étant prévue pour permettre le passage de signaux RFID au travers de la zone métallique (4) du chemin de passage vers l'unité d'émission et/ou de réception de signaux RFID ou inversement.

**10.** Elément de construction (13, 14, 18, 102, 142, 202, 204, 208, 210, 212, 214, 304, 402, 404) conforme à la revendication 9,
**caractérisé en ce que**
la zone de passage de signaux (24, 112) comporte au moins un perçage, une ouverture, une fente (26, 114) ou un dispositif de fente (116) dans la zone métallique (4).

**11.** Elément de construction (13, 14, 18, 102, 142, 202, 204, 208, 210, 212, 214, 304, 402, 404) conforme à la revendication 10,
**caractérisé en ce que**
le perçage, l'ouverture, la fente (26, 114) ou le dispositif de fente (116) sont fermés par un matériau non électriquement conducteur.

**12.** Elément de construction (13, 14, 18, 102, 142, 202, 204, 208, 210, 212, 214, 304, 402, 404) conforme à la revendication 10 ou 11,
**caractérisé en ce que**
le perçage, l'ouverture, la fente ou le dispositif de fente sont une largeur d'environ 1 à 20 mm et une longueur d'environ 10 mm à environ 500 mm.

**13.** Elément de construction conforme à l'une des revendications précédentes,
**caractérisé en ce que** :

13.1 l'élément de construction est réalisé pour permettre le passage et/ou le support de véhicules de manutention (108) pour permettre le transport de marchandises ou de matériaux, et/ou

13.2 la zone métallique est constituée par une plaque métallique qui est équipée du côté situé à l'opposé du chemin de passage de nervures de renforcement en saillie et/ou d'un élément de renforcement (121) complétant le renforcement et/ou la rigidification de la zone de passage des signaux (24, 112).

14. Elément de construction conforme à l'une des revendications précédentes, en particulier réalisé sous la forme d'un pont de chargement,

**caractérisé en ce qu'**il comporte

au moins une unité d'entrainement (454, 56) pour permettre l'entrainement motorisé du déplacement de l'élément de construction et un dispositif de commande (450) muni de moyens de commande et/ou de surveillance (466) de l'unité d'entrainement (454, 456), le dispositif de commande (450) comportant une électronique RFID (462) pour permettre la connexion du dispositif d'émission ou de réception de signaux RFID (19).

15. Elément de construction conforme à la revendication 14,

**caractérisé en ce que**

l'électronique RFID (462) et les moyens de commande et/ou de surveillance (466) sont logés dans un boitier de commande commun.

**Fig. 1**

**Fig. 2**

**FIG 3**

**FIG 4**

**FIG 5**

## FIG 6

## FIG 7

**Fig. 8**

**Fig. 9**

**Fig. 10**

## FIG 11

114

160

114

116

d

b

112

l

## FIG 12

114

160

114

160

114

d

116

112

b

l

## FIG 13

114

160

114

160

114

160

114

d

116

b

112

l

## FIG 14

114
160
114
160
114
160
114
160
114

d

b

116

112

l

## FIG 15

162

124

## FIG 16

124

164

166   B   172   4

h

Breite des Erfassungsbereiches einer Antenne

Höhe des Erfassungs bereiches

102

114, 116

Antenne1

19

**Fig. 17**

112

Bodenplatte

142

126   142   102

4

120

12

124a   124b   **Fig. 18**   19   124c

**Fig. 19**

**Fig. 20**

## FIG 21

## FIG 22

## FIG 23

112,24
19
112,24
19
4
112,24
19
300
304

## FIG 24

19
124
400
19
124
112,116
19
124
404
4
112,116
4
402
114
24
24
19
24
19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2453829 A
- EP 1376463 A1
- DE 102009006977 A1
- WO 0137215 A1
- WO 2009012796 A1
- DE 102007061707 A1
- DE 202007019033 U1
- WO 2008122831 A1
- WO 2005116945 A2
- WO 2007140800 A1

**In der Beschreibung aufgeführte Nicht-Patentliteratur**

- *Transportwirtschaft und Logistik,* 2007, http://epub.wu-wien.ac.at
- **GERTHSEN ; KNESER ; VOGEL.** Physik. Springer Verlag, 1977